# EUROPEAN PATENT APPLICATION

(11) **EP 4 446 795 A1**
(43) Date of publication of application: **16.10.2024**
(21) Application number: 21969691.1
(22) Date of filing: 31.12.2021
(51) Int. Cl.: G02B 27/01, B60K 35/00

(54) **DISPLAY APPARATUS, HEAD-UP DISPLAY, AND TRANSPORTATION EQUIPMENT**

(30) Priority: 30.12.2021 CN 202111653657
(71) Applicant: Futurus Technology Co., Ltd., Beijing 100176 (CN)
(72) Inventor: XU, Junfeng, Beijing 100176 (CN); FANG, Tao, Beijing 100176 (CN); WU, Huijun, Beijing 100176 (CN)
(74) Representative: FDST Patentanwälte
(86) International application number: PCT/CN2021/143650
(87) International publication number: WO 2023/123338

(57) **Abstract**

A display apparatus, a head-up display, and transportation equipment. In the display device, a first image source (11) comprises a first display area (110); a refractive element (2) is configured to refract image light emitted from at least partial area of the first display area (110); the image light refracted by the refractive element (2) is reflected by a first reflective element (31) and propagated to an observation area (5) to form a first virtual image; along the direction from a first end (e1) of the at least partial area to a second end (e2) thereof, an optical distance of at least part of the image light emitted from the at least partial area between a light incident surface (21a) of the refractive element (2) and a light exit surface (21) thereof is gradually decreased. According to the display apparatus, the requirement for the mounting angle of the first image source (11) used for realizing oblique imaging can be reduced, the occupied space is small, the structure is compact, the flexibility is improved, and the application range of the display apparatus for realizing oblique imaging is expanded.

## Description

### TECHNICAL FIELD

At least one embodiment of the present disclosure relates to a display device, a head-up display and a transportation equipment.

### BACKGROUND

Head-up display (HUD) enables a user (such as a driver and/or a passenger) to directly see information without looking down at a dashboard during driving, by utilizing reflective optical designs through projecting image light (including vehicle information such as vehicle speed) emitted from an image source onto an imaging window (a structure such as a windshield, an imaging board, and the like), which can not only improve the safety factor of driving but also bring better driving experiences.

A picture displayed by the head-up display may be an oblique picture, that is, the picture as displayed is visually oblique when viewed by human eyes. For example, the proximal end (an end close to the user) of the oblique picture is lower, while the distal end (an end close to the user) is higher, compared with a vertical picture, such oblique picture possesses a better effect of being closely attached onto the ground surface, which allows the image to be better blended with real objects of the outside. For example, when the oblique picture shows a road sign located on the ground surface, such as a static or dynamic turning arrow, the road sign in the picture as displayed seems to be attached onto a surface of the road, thereby achieving a better indicating effect.

### SUMMARY

At least one embodiment of the present disclosure provides a display device including a first image source, a refraction element and a first reflection element. The first image source includes a first display area; the refraction element is configured to refract image light emitted from at least partial region of the first display area; the image light refracted by the refraction element is reflected by the first reflection element and propagated to an observation area to form a first virtual image; along a direction from a first end of the at least partial region to a second end of the at least partial region, an optical distance of at least part of the image light emitted from the at least partial region between a light incident surface of the refraction element and a light exiting surface of the refraction element gradually decreases.

For example, in the display device provided by at least one embodiment of the present disclosure, the first virtual image corresponding to the image light emitted from the at least partial region has a proximal end close to the observation area and a distal end away from the observation area, the image light corresponding to the first end corresponds to the proximal end, and the image light corresponding to the second end corresponds to the distal end, and a height of the distal end of the first virtual image is higher than a height of the proximal end of the first virtual image.

For example, in the display device provided by at least one embodiment of the present disclosure, along the direction from the first end of the at least partial region to the second end of the at least partial region, a thickness of the refraction element in a direction of a chief light of the image light emitted from the at least partial region gradually decreases; and/or, along the direction from the first end of the at least partial region to the second end of the at least partial region, a refraction index of the refraction element in the direction of the chief light of the image light emitted from the at least partial region gradually decreases.

For example, in the display device provided by at least one embodiment of the present disclosure, along the direction from the first end of the at least partial region to the second end of the at least partial region, the refraction index of the refraction element remains unchanged in a case that the thickness of the refraction element in the direction of chief light of the image light emitted from the at least partial region gradually decreases; along the direction from the first end of the at least partial region to the second end of the at least partial region, the thickness of the refraction element in the direction of chief light of the image light emitted from the at least partial region remains unchanged in a case that the refraction index gradually decreases.

For example, in the display device provided by at least one embodiment of the present disclosure, a surface of the refraction element away from the first image source comprises a planar surface and/or a curved surface.

For example, in the display device provided by at least one embodiment of the present disclosure, in a case that the surface of the refraction element away from the first image source is a planar surface, the surface of the refraction element away from the first image source has a first included angle with respect to a display surface of the first display area, and the first included angle is in a range of 1° to 60 °.

For example, in the display device provided by at least one embodiment of the present disclosure, the refraction element is attached onto the at least partial region; or, the refraction element is spaced apart from the at least partial region in a direction perpendicular to a display surface of the first display area; or, the refraction element comprises a portion that is attached onto the at least partial region and a portion that is spaced apart from the at least partial region.

For example, in the display device provided by at least one embodiment of the present disclosure, the refraction element is configured to refract image light emitted from an entirety of the first display area.

For example, in the display device provided by at least one embodiment of the present disclosure, the first display area comprises a first display sub-area and a second display sub-area, and the at least partial region is the first display sub-area; image light emitted from the second display sub-area is incident on the first reflection element without being refracted by the refraction element, and the first reflection element is further configured to reflect the image light emitted from the second display sub-area and then incident on the first reflection element to the observation area to form a second virtual image, an included angle between the second virtual image and a ground surface is greater than an included angle between the first virtual image and the ground surface, and a second included angle between the second virtual image and the first virtual image is not zero.

For example, in the display device provided by at least one embodiment of the present disclosure, a displayed content of the second virtual image and a displayed content of the first virtual image are independent of each other or related to each other.

For example, in the display device provided by at least one embodiment of the present disclosure, the refraction element is an integral structure, or comprises a plurality of refraction sub-elements stacked in a direction perpendicular to a display surface of the first display area.

For example, the display device provided by at least one embodiment of the present disclosure further comprises a second reflection element, and the second reflection element is configured to reflect image light emitted from the first display area and refracted by the refraction element to the first reflection element.

For example, the display device provided by at least one embodiment of the present disclosure further comprises a second image source, the second image source comprises a second display area; image light emitted from the second display area is propagated to the first reflection element, and the image light emitted from the second display area and then propagated to the first reflection element forms a third virtual image different from the first virtual image; and an included angle between the third virtual image and a ground surface is greater than an included angle between the first virtual image and the ground surface, and a display surface of the first display area is parallel to a display surface of the second display area.

For example, the display device provided by at least one embodiment of the present disclosure further comprises a third reflection element; the image light emitted from the second display area is propagated to the first reflection element after being reflected by the third reflection element.

For example, the display device provided by at least one embodiment of the present disclosure further comprises a third image source and a transflective element; the third image source comprises a third display area; a third included angle between a display surface of the third display area and a display surface of the first display area is not zero; the transflective element is located at a side of the refraction element away from the first image source, configured to transmit image light emitted from the first display area to the first reflection element, and configured to reflect image light emitted from the third display area; the image light emitted from the third display area is propagated to the first reflection element after being reflected by the transflective element; the image light emitted from the third display area and propagated to the first reflection element forms a fourth virtual image different from the first virtual image, and the first virtual image and the fourth virtual image are at least partly overlapped.

For example, in the display device provided by at least one embodiment of the present disclosure, an orthographic projection of the first virtual image on a plane where the fourth virtual image is located is within a range of the fourth virtual image, or, an orthographic projection of the fourth virtual image on a plane where the first virtual image is located is within a range of the first virtual image.

For example, in the display device provided by at least one embodiment of the present disclosure, a center of the first virtual image, a center of the fourth virtual image and a center of an eyebox area are located on a same straight line.

At least one embodiment of the present disclosure provides a head-up display, the head-up display comprises a reflection imaging component and any one of the display devices provided by the embodiments of the present disclosure; the reflection imaging component is configured to reflect image light that is reflected by the first reflection element and then propagated to the reflection imaging component to the observation area, and to transmit ambient light.

At least one embodiment of the present disclosure provides a transportation equipment, the transportation equipment comprises any one of the display devices provided by the embodiments of the present disclosure, or any one of the head-up displays provided by the embodiments of the present disclosure.

For example, in the transportation equipment provided by at least one embodiment of the present disclosure, in a case that the transportation equipment comprises the head-up display, the reflection imaging component is a windshield window or an imaging window of the transportation equipment.

### BRIEF DESCRIPTION OF THE DRAWINGS

In order to clearly illustrate the technical solution of the embodiments of the disclosure, the drawings of the embodiments will be briefly described in the following; it is obvious that the described drawings are only related to some embodiments of the disclosure and thus are not limitative of the disclosure.
FIG. 1 is a schematic diagram of a display device provided by at least one embodiment of the present disclosure;
FIG. 2A is a schematic diagram illustrating a comparison between the case where image light emitted from a display area of an image source is refracted by a refraction element and another case where the image light emitted from the display area of the image source is not refracted by the refraction element, in at least one embodiment of the present disclosure;
FIG. 2B is a schematic diagram illustrating an equivalent object distance from a display surface of a first display area to a first reflection element in at least one embodiment of the present disclosure;
FIG. 3 is a schematic diagram of another display device provided by at least one embodiment of the present disclosure;
FIG. 4 is a schematic diagram of another display device provided by at least one embodiment of the present disclosure;
FIG. 5 is a schematic diagram of another display device provided by at least one embodiment of the present disclosure;
FIG. 6 is a schematic diagram of another display device provided by at least one embodiment of the present disclosure;
FIG. 7 is a schematic diagram of another display device provided by at least one embodiment of the present disclosure;
FIG. 8 is a schematic diagram of another display device provided by at least one embodiment of the present disclosure;
FIG. 9 is a schematic diagram of another display device provided by at least one embodiment of the present disclosure;
FIG. 10 is a schematic diagram of another display device provided by at least one embodiment of the present disclosure;
FIG. 11 is a schematic diagram of a head-up display provided by at least one embodiment of the present disclosure; and
FIG. 12 is a schematic diagram of a transportation equipment provided by at least one embodiment of the present disclosure.

### DETAILED DESCRIPTION

In order to make objects, technical details and advantages of the embodiments of the disclosure apparent, the technical solutions of the embodiments will be described in a clearly and fully understandable way in connection with the drawings related to the embodiments of the disclosure. Apparently, the described embodiments are just a part but not all of the embodiments of the disclosure. Based on the described embodiments herein, those skilled in the art can obtain other embodiment(s), without any inventive work, which should be within the scope of the disclosure.

Unless otherwise defined, all the technical and scientific terms used herein have the same meanings as commonly understood by one of ordinary skill in the art to which the present disclosure belongs. The terms "first," "second," etc., which are used in the description and the claims of the present application for disclosure, are not intended to indicate any sequence, amount or importance, but distinguish various components. The terms "comprise," "comprising," "include," "including," etc., are intended to specify that the elements or the objects stated before these terms encompass the elements or the objects and equivalents thereof listed after these terms, but do not preclude the other elements or objects.

Features such as "parallel", "perpendicular" and "equal" used in the embodiments of the present disclosure all include the meanings of "strictly parallel", "strictly perpendicular" and "strictly equal", and also the cases of "substantially parallel", " substantially perpendicular" and "substantially equal" containing certain errors, which fall within acceptable range of deviations for specific values determined by those ordinary skilled in the art by taking measurement errors and other errors related to specific numbers of measurements (for example, restrictions of measurement systems) into account. For example, "substantially" is intended to be within one or more standard deviations, or within 10% or 5% of the stated value(s). If the number of a component is not specified in the following of the embodiments of the present disclosure, it means one or more such components are provided or the number may be understood as at least one. The wording "at least one" refers to "one or more", and the wording "a plurality of/multiple" refers to "at least two".

Head-up display (HUD) can form an image which is oblique with relative to the road surface, the oblique image is more adapted to the viewing habits of human eyes, for example, it achieves a better effect when fused with external environment in a mode of augmented reality. For example, when the oblique image displays a content (such as a lane keeping sign) related to the road, the content is more closely attached with the ground surface and the usage experience is more comfortable. However, it is usually required to adjust the image source of the HUD device to form the oblique image by using HUD, and even to further adjust the position of the reflection mirror, for example, allowing the image source to be oblique, which leads to a large volume and a large space occupation of the HUD device, and hence degrades the usage convenience of the HUD device. The present disclosure provides a display device which has a compact structure and is capable of forming an oblique image, can be applied to a HUD to form an oblique image, and can reduce the volume of the HUD device, thereby improving the usage experience and usage convenience of the HUD.

The drawings in the present disclosure are not drawn strictly to actual scales, and the number of image sources and images in the display device is not limited to the number shown in the drawings. The specific size and number of each of the structures can be determined according to actual needs. The drawings described in the present disclosure are only schematic diagrams.

It should be noted that the dimensions and proportion relations of elements, as well as the dimensions of geometric paths in the drawings of the present disclosure are only schematic, and are not limited to the dimensions and proportion relations of actual elements or to the dimensions of actual geometric paths. The specific lengths of the geometric paths as involved should be understood in combination with the text descriptions.

At least one embodiment of the present disclosure provides a display device including a first image source, a refraction element and a first reflection element. The first image source includes a first display area. The refraction element is configured to refract image light emitted from at least partial region of the first display area. The image light refracted by the refraction element is reflected by the first reflection element and propagated to an observation area to form a first virtual image. Along a direction from a first end of the at least partial region to a second end of the at least partial region, an optical distance of at least part of the image light emitted from the at least partial region between a light incident surface of the refraction element and a light exiting surface of the refraction element gradually decreases. The display device provided by at least one embodiment of the present disclosure can be utilized to realize oblique imaging without the necessity for the first image source to have a large installation space. The cooperation between the first image source and the refraction element can enable an entirety of or a part of a display picture in the first display area to be an oblique image. Compared with the existing oblique imaging technology, the display device provided by at least one embodiment of the present disclosure can realize an oblique image without imposing higher installation requirements (such as a larger installation angle and a larger installation space) on the image source, furthermore, the display device is simple and compact in structure and can also realize an oblique picture. Therefore, the display device can reduce the installation requirements on the first image source for realizing oblique imaging, and has a smaller occupied space, compact structure and improved flexibility, thereby expanding the application range of the display device for realizing oblique imaging.

At least one embodiment of the present disclosure further provides a head-up display, and the head-up display includes a reflection imaging component and any one of the display devices provided by at least one embodiment of the present disclosure. The reflection imaging component is configured to reflect the image light that is reflected to the reflection imaging component by the first reflection element to the observation area, and to transmit ambient light.

At least one embodiment of the present disclosure further provides a transportation equipment including any one of the display devices provided by at least one embodiment of the present disclosure or any one of the head-up displays provided by at least one embodiment of the present disclosure.

The display device, the head-up display, and the transportation equipment provided by at least one embodiment of the present disclosure are described below with reference to the accompanying drawings. It should be noted that the same components can be arranged in the same way. All embodiments of the present disclosure are applicable to multiple protected subjects such as the display device, the heads-up display and the transportation equipment, and the same or similar contents are not repeated in each of the protected subjects. Instead, reference can be made to the description in the corresponding embodiments of other protected subjects.

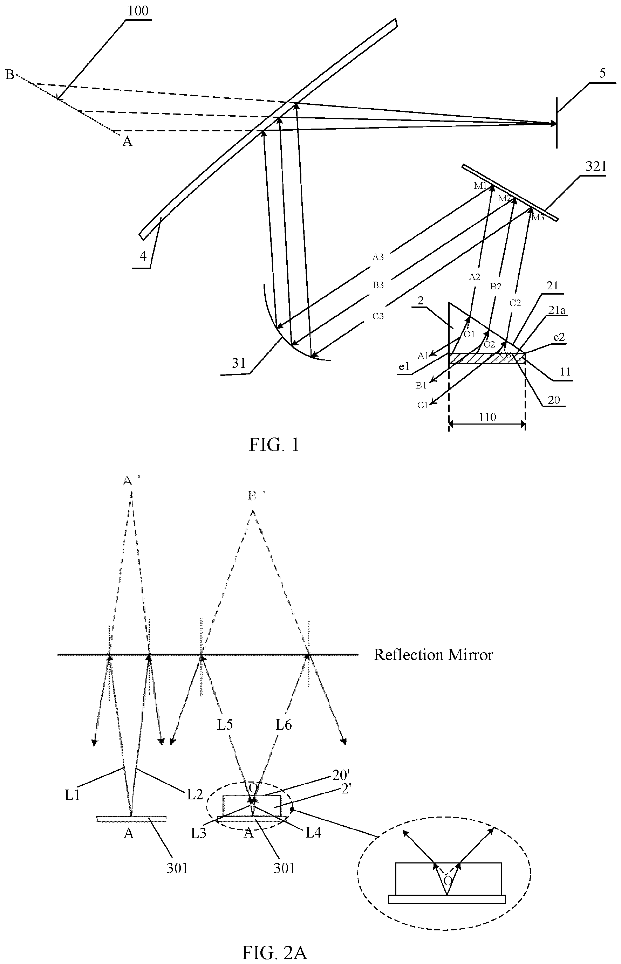

Illustratively, FIG. 1 is a schematic diagram of a display device provided by at least one embodiment of the present disclosure. As shown in FIG. 1, the display device includes a first image source 11, a refraction element 2 and a first reflection element 31. The first image source 11 includes a first display area 110; the refraction element 2 is configured to refract image light emitted from at least partial region of the first display area 110; the first reflection element 31 is configured such that the image light refracted by the refraction element 2 is reflected by the first reflection element 31 and then propagated to an observation area 5 to form a first virtual image 100; the refraction element 2 has a light incident surface 21a and a light exiting surface 21; along a direction from a first end e1 of the at least partial region to a second end e2 of the at least partial region, an optical distance of at least part of the image light emitted from the at least partial region between the light incident surface 21a of the refraction element 2 and the light exiting surface 21 of the refraction element 2 gradually decreases, that is, the optical distance of at least part of the image light emitted from the at least partial region gradually decreases during the process from being incident on the refraction element 2 to exiting the refraction element 2. For example, the refraction element 2 has a lower surface 21a and an upper surface 21. For example, the lower surface 21a is a surface of the refraction element 2 close to the first image source 11 (the lower surface can also be regarded as the light incident surface of the image light), and the upper surface 21 is a surface of the refraction element 2 away from the first image source 11 (the upper surface can also be regarded as the light exiting surface of the image light). Along the direction from the first end e1 of the at least partial region to the second end e2 of the at least partial region, the optical distance of the image light (such as the image light in FIG. 1) emitted from the at least partial region gradually decreases during the process from being incident on the refraction element 2 through the lower surface 21a to exiting the refraction element 2 through the upper surface 21.

For example, a range from a proximal end close to the observation area 5 to a distal end away from the observation area 5 of the first virtual image 100 is correspondingly formed by the image light emitted from the at least partial region; along the direction from the first end e1 of the at least partial region to the second end of the at least partial region, the optical distance of the image light emitted from the at least partial region gradually decreases during the process from being incident on the refraction element 2 to exiting the refraction element 2. For example, in the display device shown in FIG. 1, the at least partial region refers to the entire first display area 110. For example, the refraction element 2 is configured to refract the image light emitted from the entire first display area 110. In the embodiment shown in FIG. 1, the at least partial region may be the first display area 110, correspondingly, in the following description of the embodiment shown in FIG. 1, the at least partial region is indicated by the first display area 110.

Oblique imaging can be realized by using the display device provided by at least one embodiment of the present disclosure. The display device does not impose high installation requirements (for example, it must be oblique with relative to the ground surface) on the first image source used for oblique imaging, and the installation of the first image source 11 does not need to occupy a large space or hardly occupies a large space. When the display device is applied to a head-up display, the display device has a compact structure, increases installation flexibility and improves usage experience of the head-up display, thereby expanding the application range of the display device used for oblique imaging.

For example, the cooperation between the first image source 11 and the refraction element 2 enables the entire or part of the picture displayed by the first display area 110 to be an oblique image. For example, the image light emitted from the first display area 110 is refracted at least at an interface between the refraction element 2 and the air (for example, an interface between the medium of the refraction element 2 and air). For example, as an example, FIG. 1 shows three light rays, in which light rays A1, B1 and C1 emitted from the display surface 20 of the first display area 110 are respectively refracted at an interface between the refraction element 2 and the air (for example, an interface between the upper surface 21 and the air) and then become light rays A2, B2 and C2 respectively. In the propagation process of the light emitted from the display surface 20 of the first display area 110, an equivalent object distance (the equivalent object distance will be explained later) from the display surface 20 of the first image source 11 to the first reflection element 31 is reduced by using the refraction element 2, which increases the optical distance for the image light during the process from being emitted from the first display area 110 to being propagated to the first reflection element 31. Moreover, along the direction from the first end e1 of the first display area 110 to the second end e2 of the first display area 110, the optical distance of the image light emitted from the first display area 110 gradually decreases during the process from being incident on the refraction element 2 through the lower surface 21a to exiting the refraction element 2 through the upper surface 21; for example, positions where the light rays A1, B1 and C1 are incident on the lower surface 21a of the refraction element 2 are distributed sequentially along the direction from the first end e1 of the first display area 110 to the second end e2 of the first display area 110, and optical distances of the light rays A1, B1 and C1 during the process from being incident on the refraction element 2 through the lower surface 21a to exiting the refraction element 2 through the upper surface 21 are successively decreased. As a result, along the direction from the first end e1 of the first display area 110 to the second end e2 of the first display area 110, the additional optical distance gradually decreases. Therefore, along the direction from the first end e1 of the first display area 110 to the second end e2 of the first display area 110, the equivalent object distance from the display surface 20 of the first display area 110 to the first reflection element 31 gradually increases, and the first virtual image correspondingly formed by the image light emitted from the at least partial region can be realized as an oblique image.

For example, in the case where the first reflection element 31 includes a curved reflection mirror (for example, the reflection surface is a concaved surface), if an optical distance of the image light emitted by the image source (including the image light emitted by the image source, e.g., by the display surface of the first image source 11 disclosed in the present disclosure, or the image light that is emitted from the display surface of the image source and then processed by some optical elements such as the refraction element 2) from the display surface of the image source to the concaved reflection mirror is smaller than the focal length of the concaved reflection mirror, an upright and magnified virtual image is formed by the concaved reflection mirror based on the image to be displayed. For example, according to the imaging properties of the concaved reflection mirror, if a propagation distance (e.g., the equivalent object distance) of the image light emitted by the image source during the process of being propagated from the display surface of the image source to the concaved reflection mirror is smaller than the focal length of the concaved reflection mirror (e.g., the image is located at a position within a range of one focal length of the concaved reflection mirror), the imaging distance of the concaved reflection mirror increases with the increase of the distance between the original image to be displayed and the concaved reflection mirror (e.g., the distance between the original image to be displayed and the concaved reflection mirror may be considered as the equivalent object distance). For example, the image light that is reflected by the first reflection element 31 and exits the first reflection element 31 will be reflected to the user's eyes by a reflection imaging component such as the windshield of a transportation equipment. It should be understood that the windshield is generally a planar surface structure or a curved surface structure with a small curvature, so the imaging distance of the virtual image observed by the user is mainly determined by the first reflection element 31. It may be considered that the position of the virtual image formed by the image light reflected by the first reflection element 31 mainly determines the position (for example, an imaging distance of the virtual image) of the virtual image of the head-up display observed by the user. As mentioned above, the position (e.g., the imaging distance of the virtual image) of the virtual image formed by the image light reflected by the first reflection element 31 is farther with the increase of the distance between the original image to be displayed and the concaved reflection mirror. For example, the greater the equivalent object distance between the original image to be displayed and the concaved reflection mirror, the greater the distance between the user, who uses the head-up display including the display device, and the image observed by the user, and the greater the distance between the observation area and the image observed by the user's eyes in the observation area. In at least one embodiment of the present disclosure, by arranging a refraction element 2 with a small volume on the optical path along which the image light emitted by the image source, such as the first image source 11, is propagated to the first reflection element 31, so as to adjust the equivalent object distance for the image light emitted by the image source to be propagated to the first reflection element, the imaging distance (for example, the imaging distance when imaging after light reflected by the first reflection element 31) of an image formed by the first reflection element 31 can be changed, and the adjustment of the position of the formed virtual image can be realized, for example, an oblique virtual image can be formed.

Compared with the existing oblique imaging technology, the display device provided by at least one embodiment of the present disclosure can realize an oblique image with low installation requirement. For example, it is not necessary to change or only needs to slightly change the setting mode of the display surface 20 of the image source such as the first image source 11, for example, an oblique angle (for example, it can still realize an oblique image even if an included angle of the display surface 20 with respect to the horizontal direction or with respect to a display surface of a second image source that can form a vertical image is not zero); the horizontal direction may refer to a direction parallel to the traveling direction of the transportation equipment utilizing or provided with the head-up display and/or the display device. Therefore, the display device can reduce the installation requirements imposed on the first image source 11 for realizing oblique imaging, for example, reducing the requirements on the installation angle, decreasing the installation space, increasing the flexibility and expanding the applicability of the display device for realizing oblique imaging. For example, in some other embodiments, the first image source may be arranged at other angles (theoretically, it may be at any angle, which may be designed according to the position of the first reflection element 31). By additionally providing a corresponding refraction element, the requirement on the oblique angle of the oblique image can be satisfied. That is, the display device provided by at least one embodiment of the present disclosure can reduce the installation requirement for the first image source.

For example, the refraction element 2 can transmit light, and has a refraction index different from that of the air. For example, the refraction index of the refraction element 2 is greater than that of the air (for example, greater than 1). For example, the material of the refraction element 2 may be at least one selected from a group consisting of an inorganic material, an organic material and a composite material. For example, the inorganic material may include glass, or quartz, or the like; the organic material may include a polymer material such as a resin material, and the composite material may include metal oxide doped with polymethyl methacrylate (PMMA), and the like. The material of the refraction element 2 is not limited to the materials listed above, as long as it can transmit light and has a refraction index different from that of the air.

For example, the refraction element 2 possess a light transmissivity of 60% to 100%. For example, the refraction element 2 possess a light transmissivity of 80% to 99%. For example, the refraction element 2 possess a light transmissivity of 90% to 99%.

The above-mentioned "the optical distance for the image light during the process from being emitted from the first display area 110 to being propagated to the first reflection element 31", that is increased by the refraction element 2, refers to a product of, a geometric distance for the image light from being emitted from the corresponding first display area 110 to being propagated to the first reflection element 31, and the refraction index of the propagation medium. With the arrangement of the refraction element 2, the geometric path for the image light from being emitted from the first display area 110 to being propagated to the first reflection element 31 includes a part for the image light to pass through the refraction element 2 and another part for the image light to pass through the air; and the product of, the part of the geometric path for the image light to pass through the refraction element 2 and the refraction index of the material of the refraction element 2 passed by the image light, may be the above-mentioned "additional optical distance". Alternatively, the above-mentioned "additional optical distance" may also be defined as a product of, the part of the geometric path for the image light to pass through the refraction element 2 of the geometric path for the image light from being emitted from the first display area 110 to being propagated to the first reflection element 31, and a refraction index difference obtained by subtracting the refraction index of the air from the refraction index of the refraction element 2 passed by the image light.

For example, an oblique image may refer to a displayed image which has a non-zero and non-90 degrees included angle with respect to a surface (e.g., the ground surface) where an equipment (e.g., the head-up display and/or the transportation equipment) including the display device is located during the user's usage of the display device. For example, the displayed image observed by the user in the observation area 5 has a non-zero and non-90 degrees included angle with respect to the instantaneous ground surface, and the displayed image is visually oblique for the user, rather than being vertical relative to the ground surface during the user's usage of the display device. For example, the first virtual image 100 is oblique with respect to the ground surface. For example, the content displayed in the oblique image can include an image related to the road, such as at least one selected from a group consisting of a lane indication sign, a distance indication sign of preceding vehicle and a turning indication sign. The oblique image can be more closely attached with the ground surface (for example, a better augmented reality fusion effect), so that the image can be better blended with real objects of the outside to improve the user's experience of the display device.

For example, the first reflection element 31 may be a curved reflection mirror, for example, the curved reflection mirror may be a concaved reflection mirror. In this case, a reflection surface of the concaved reflection mirror is an internally concaved surface, for example, the surface close to the display area is an internally concaved reflection surface. When the display device provided by at least one embodiment of the present disclosure is applied to a head-up display, the arrangement of the curved reflection mirror enables the head-up display to possess a longer imaging distance and a larger imaging size; and the curved reflection mirror can also be cooperated with a reflection imaging component with a curved surface (mentioned later) such as a windshield to eliminate a virtual image distortion caused by the reflection imaging component.

For example, a reflection surface of a second reflection element 321 may be a free-form surface. For example, the reflection surface of the first reflection element 31 is out of rotational symmetry, so as to improve the imaging quality of the display device.

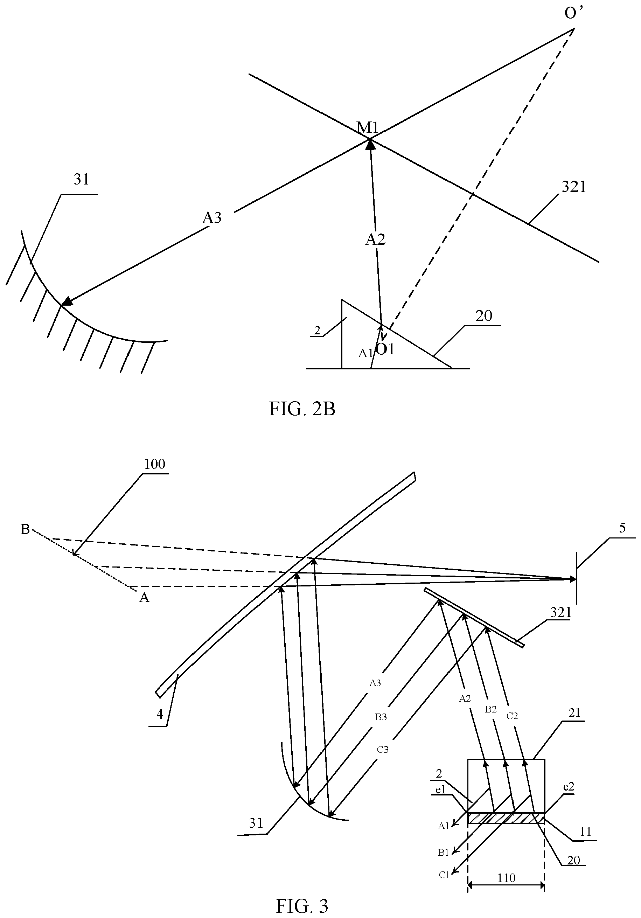

FIG. 2A is a schematic diagram illustrating a comparison between the case where image light emitted from a display area of an image source is refracted by a refraction element and another case where the image light emitted from the display area of the image source is not refracted by the refraction element, in at least one embodiment of the present disclosure; FIG. 2B is a schematic diagram illustrating an equivalent object distance from the display surface of the first display area to the first reflection element in FIG. 1. In FIG. 2A, the function of the refraction element in at least one embodiment of the present disclosure is explained with reference to a reference image source 301 and a refraction element 2' as an example. The refraction element 2' in FIG. 2B, is the same as the refraction element 2 in FIG. 2A, and the reference image source 301 in FIG. 2A is equivalent to the first image source 11 in 2A with the only difference that there is no oblique angle as that of the first image source 11. As shown in the diagram at the left side of FIG. 2B, an image light ray L1 and an image light ray L2 emitted from a point A on the display surface of the reference image source 301 are directly incident on the reflection mirror without passing through a refraction element. As shown in the diagram at the right side of FIG. 2B, an image light ray L3 and an image light ray L4 that are also emitted from the point A on the display surface of the reference image source 301 are incident into the refraction element 2' and then exit through a surface of the refraction element 2' away from the reference image source 301. The surface of the refraction element 2' away from the reference image source 301 is an interface between the refraction element 2' and the air. Because the refraction index of the refraction element 2' (the refraction index of the air) is different from (for example, greater than the refraction index of the air) that of the air, the image light rays are refracted at the interface between the refraction element 2' and the air. The image light rays after being refracted exit through the surface of the refraction element 2' away from the reference image source 301 as the image light rays L5 and L6 respectively, and then are incident on the reflection mirror. For example, in the case where the refraction element 2' is closely attached on the light exiting surface of the reference image source 301, an exit angle of the image light ray L3 and an exit angle of the image light ray L4 are respectively as same as those of the image light ray L1 and the image light ray L2 (in the case where there is an air layer between the refraction element 2' and the light exiting surface of the image source, the same principles are applicable). In this case, extension lines of the image light ray L5 and the image light ray L6 that exit through surface of the refraction element 2' away from the reference image source 301 are intersected at a point O (for example, the two dotted lines shown in FIG. 2A are intersected at the point O), and a plane, where a plurality of points O corresponding to a plurality of image light rays is located, is equal to an equivalent display surface, thus a distance from the point O to the reflection mirror is an equivalent object distance from the reference image source 301 to the reflection mirror. Therefore, the equivalent object distance can be regarded as a distance between the reflection mirror and a position of a virtual image formed by the reference image source 301 through the last optical element (such as the refraction element 2', or the second reflection element 321 in fig. 2B) before the light reaches the first reflection element 31, in the case that an optical element is provided between the image source 301 and the first reflection element 31. Obviously, a distance from the point O to the reflection mirror is smaller than a distance from the point A to the reflection mirror. For example, the equivalent object distance from the reference image source 301 (by taking the point A as an example) to the reflection mirror in the case where the refraction element 2' is provided is smaller than that in the case where the refraction element 2' is not provided. Given the same conditions, it is equivalent to reducing a distance from the display surface of the reference image source 301 to the reflection mirror (for example, reducing the equivalent object distance) by providing the refraction element 2', as compared with the case where the refraction element 2' is not provided. In at least one embodiment of the present disclosure, for example, referring to FIG. 1 in combination with FIG. 2B, the reflection surface of the first reflection element 31 includes a curved surface, for example, the first reflection element 31 is a curved reflection mirror; in the case where an optical element such as the refraction element 2 exists between the first image source 11 and the reflection surface of the first reflection element 31, the equivalent object distance from the first image source 11 to the first reflection element 31 is a distance from, a position of the virtual image formed by the image light emitted from the first image source 11 through the last optical element such as the refraction element 2 before the light reaches the first reflection element 31, to an optical center of the curved reflection surface of the first reflection element 31. Therefore, similarly, in the display device shown in FIG. 1, the equivalent object distance from the display surface 20 of the first image source 11 to the first reflection element 31 in the case where the refraction element 2 is provided is smaller than the distance from the display surface 20 of the first image source 11 to the first reflection element 31 in the case where the refraction element 2 is not provided, which is equivalent to reducing the distance from the display surface 20 of the first image source 11 to the first reflection element 31 by providing the refraction element 2, as compared to the case where the refraction element 2 is not provided. In the display device provided by at least one embodiment of the present disclosure, along the direction from the first end e1 of the first display area 110 to the second end e2 of the first display area 110, the additional optical distance gradually decreases, and as a result, along the direction from the first end e1 of the first display area 110 to the second end e2 of the first display area 110, the reduction amount of the equivalent object distance gradually decreases; therefore, along the direction from the first end e1 of the first display area 110 to the second end e2 of the first display area 110, the equivalent object distance from the display surface 20 of the first display area 110 to the first reflection element 31 gradually increases, and in this way, the first virtual image 100 correspondingly formed by the image light emitted from the at least partial region can be realized as an oblique image.

As shown in FIG. 2B, the leftmost single light ray A1-A2-A3 emitted from the first display area 110 in FIG. 1 is taken as an example, the light ray A1 is emitted from the display surface 20 of the first display area 110 and becomes into the light ray A2 after being refracted at an interface between the refraction element 2 and the air, in which a line segment O1O' is perpendicular to the reflection surface of the second reflection element 321, with the point O1 as an intersection of a reverse extension line of the light ray A2 and the line segment O1O'. An equivalent object distance from a position where the light ray A1 is emitted from the display surface 20 of the first display area 110 to the first reflection element 31 is the sum of the lengths of segment M1O1 and segment A3 which is (M1O1+A3). Similarly, in FIG. 1, an equivalent object distance from a position where the light ray B1 is emitted from the display surface 20 of the first display area 110 to the first reflection element 31 is the sum of the lengths of segment M2O2 and segment B3 which is (M2O2+B3); and in FIG. 1, an equivalent object distance from a position where the light ray C1 is emitted from the display surface of the first display sub-area 111 to the first reflection element 31 is the sum of the lengths of segment M3O3 and segment C3 which is (M3O3+C3). It is satisfied that (M3O3+C3)> (M2O2+B3)> (M1O1+A3). Here, description is given with reference to the above-mentioned three positions of the display surface of the first display area 110 as an example, along the direction from the first end e1 of the first display area 110 to the second end e2 of the first display area 110, the equivalent object distance from the display surface 20 of the first display area 110 to the first reflection element 31 gradually increases, so that the first virtual image 100 can be the above-mentioned oblique image, without the necessity for the display surface 20 of the first display area 110 to be oblique relative to the horizontal direction.

For example, as shown in FIG. 1, a height of a distal end of the first virtual image 100 is greater than that of a proximal end of the first virtual image 100, and such first virtual image 100 is consistent with the perspective relationship of human eyes when watching objects. Compared with the situation that the height of the proximal end of the oblique image is greater than that of the distal end, the first virtual image 100 with a distal end higher than the proximal end enables the user (such as a driver) to get a more comfortable experience when observing the oblique image during driving. When the oblique first virtual image 100 is used to present, for example, a road sign on the ground surface, the image of the road sign observed by the user is more closely attached with the ground surface, so that the oblique first virtual image 100 can achieve a better observing effect. For example, the "height" here can be referred to a height with relative to the ground surface.

For example, in some embodiments, the height of the distal end of the first virtual image 100 is smaller than the height of the proximal end of the first virtual image 100, which can be designed according to the requirements for presenting different images.

For example, the height of the distal end of the first virtual image may be made higher than the height of the proximal end of the first virtual image by adjusting the positional relationship between the first image source and the first reflection element and by adjusting the heights of the first end and the second end of the display surface of the at least partial region. It should be noted that the first end of the first display area 110 is also the first end of the display surface 20 of the first display area 110, and the second end of the first display area 110 is also the second end of the display surface 20 of the first display area 110.

For example, in the embodiment shown in FIG. 1, the display surface 20 of the first display area 110 is parallel to the above-mentioned horizontal direction, for example, the display surface 20 of the first display area 110 is not oblique; for example, a height of the first end e1 of the display surface 20 with relative to the ground surface when the user uses the display device is equal to a height of the second end e2 of the display surface 20 with relative to the ground surface when the user uses the display device. For example, in some other embodiments, the display surface 20 of the first display area 110 may also possess a non-zero included angle with respect to the ground surface, for example, it may be oblique with respect to the ground surface, as long as the display surface 20 of the first display area 110 is cooperated with the refraction element 2 and the first reflection element 31 described above to form an oblique first virtual image 100. For example, in some other embodiments, the image light reflected by the first reflection element 31 is reflected by the windshield to form the oblique first virtual image 100, for example, the display surface 20 of the first display area 110 is cooperated with the refraction element 2, the first reflection element 31 and the windshield as described above to form the oblique first virtual image 100. For example, the second end e2 of the display surface 20 of the first display area 110 is farther away from the first reflection element 31 as compared with the first end e1 of the display surface 20; for example, a distance between the first end e1 of the display surface 20 of the first display area 110 and the first reflection element 31 is smaller than a distance between the second end e2 of the display surface 20 of the first display area 110 and the first reflection element 31; moreover, along the direction from the first end of the first display area 110 to the second end of the first display area 110, the optical distance of the image light emitted from the first display area 110 gradually decreases during the process from being incident on the refraction element 2 to exiting the refraction element 2, as a result, the equivalent object distance from the second end e2 of the display surface 20 to the first reflection element 31 is longer, for example, the height of the distal end of the first virtual image 100 is higher than that of the proximal end of the first virtual image 100.

For example, in some embodiments, the image light which is emitted from the first display area 110 and then refracted by the refraction element 2 is directly incident on the first reflection element 31 without passing through other reflection element, for example, no optical element is arranged between the first reflection element 31and an integrity constituted by the first image source 11 and the refraction element 2. For another example, in the embodiment shown in FIG. 1, the display device further includes a second reflection element 321. The second reflection element 321 is configured to reflect the image light that is emitted from the first display area 110 and then refracted by the refraction element 2 to the first reflection element 31, and then the first reflection element 31 reflects the image light incident on its reflection surface. The image light reflected by the first reflection element 31 is propagated to the observation area 5 to form the first virtual image 100.

For example, in some other embodiments, the second reflection element 321 may be a planar reflection mirror. For example, the second reflection element 321 may also be a curved reflection mirror, such as one or more selected from a group consisting of a free-form mirror, an aspheric mirror and a spherical mirror. At least one embodiment of the present disclosure schematically shows the case that the second reflection element 321 is a planar reflection mirror. By using the planar reflection mirror, the optical path inside the display device can be folded to save the space, and additional distortion and/or size change of the image displayed in the display device can also be avoided.

For example, as shown in FIG. 2B, the second reflection element 321 is located at a display side of the first image source 11. However, it is not limited to this case; in some other embodiments, the second reflection element may be located at a non-display side of the first image source, and the light emitted by the first image source can be directed to the first reflection element through other reflective structures. The first reflection element 31 is configured to reflect the image light which is propagated to the first reflection element 31 after being reflected by the second reflection element 321. For example, the image light emitted by the first image source 11 is reflected towards the first reflection element 31 by the second reflection element 321. For example, the first reflection element 31 is located at a side of the second reflection element 321 facing the first image source 11. For example, no optical element is arranged between the first reflection element 31 and the second reflection element 321, and the light reflected by the second reflection element 321 can be directly incident on the first reflection element 31. However, it is not limited to this case, in some other embodiments, other optical elements, such as reflective structures or lenses, may be arranged between the first reflection element and the second reflection element, and the light processed by the other optical elements as mentioned above is incident on the first reflection element.

For example, the above-mentioned display side of the first image source 11 refers to a side where the first image source 11 emits light. FIG. 2B shows that the display device includes the second reflection element 321 and the first reflection element 31, but it is not limited to this case. In some other embodiments, the display device may only include the first reflection element 31 without the second reflection element 321. In this case, the image light that is emitted from a first display sub-area 111 and a second display sub-area 112 and then refracted by the refraction element 2 is directly incident on the first reflection element 31 without being reflected by the second reflection element 321.

For example, in the embodiment shown in FIG. 1, along the direction from the first end e1 of the first display area 110 to the second end e2 of the first display area 110 (for example, along the direction from the first end of the at least partial region to the second end of the at least partial region), the refraction index of the refraction element 2 remains unchanged, and the thickness of the refraction elements 2 in the direction of chief light of the image light emitted from the at least partial region gradually decreases. For example, in at least one embodiment, the thickness of the refraction element 2 in the direction perpendicular to the display surface 20 of the first display area 110 gradually decreases, so that along the direction from the first end e1 of the first display area 110 (e.g., the at least partial region) to the second end e2 of the first display area 110, for example, the optical distance of the image light emitted from the first display area 110 gradually decreases during the process from being incident on the refraction element 2 to exiting the refraction element 2, thereby gradually adjusting the equivalent object distance of the display surface 20 in the direction from the first end e1 of the first display area 110 to the second end e2 of the first display area 110; as a result, the equivalent object distance of the display surface 20 along this direction gradually increases, and an oblique first virtual image 100 can be obtained.

For example, the above-mentioned "chief light (main optical axis, chief ray, or optical axis)" refers to a center line or an axis line of a light beam or a light ray, and can also be considered as a major direction of propagation of the light beam.

For example, along the direction from the first end of the at least partial region to the second end e2 of the at least partial region, the thickness of the refraction element corresponding to the at least partial region in the direction perpendicular to the display surface of the at least partial region gradually decreases, which refers to that the thickness is monotonically decreased, for example, linearly decreased or nonlinearly decreased.

For example, in the embodiment shown in FIG. 1, the entire refraction element 2 may be made of the same material, for example, the entire refraction element 2 is an integrally formed structure, so that the refraction index of the refraction element 2 remains unchanged along the direction from the first end e1 of the first display area 110 to the second end e2 of the first display area 110.

For example, as shown in FIG. 1, a surface 21 of the refraction element 2 away from the first image source 11 is a planar surface, so that the gradual change of the surface 21 of the refraction element 2 away from the first image source 11 is more uniform in the direction from the first end e1 of the first display area 110 to the second end e2 of the first display area 110. In this way, the oblique degree of the first virtual image 100 is substantially consistent at all positions, so as to prevent the phenomenon of excessive bending in some parts of the oblique image, and provide the user with a better visual experience. For example, in some other embodiments, the surface 21 of the refraction element 2 away from the first image source 11 may be a curved surface, and for example, the thickness of the refraction element 2 in the direction perpendicular to the display surface 20 of the first display area 110 may gradually decrease.

For example, the light exiting surface of the refraction element 2 is a curved surface. For example, the surface of the refraction element 2 away from the first image source 11 is a convex curved surface. For example, if the image light exits through a refraction element 2 including a curved light exiting surface, the virtual image formed by the display device will be morphologically changed; for example, in the case where the display device is applied to a head-up display, the user observes a curved virtual image in the observation area in such a manner that a curved concave surface of the virtual image faces the user, a part of the virtual image close to the ground surface can display an indication content related to the road, and a curved part of the virtual image (the part of the virtual image away from the ground surface) can display other contents, e.g., POI information at both sides.

For example, in the case where the surface 21 of the refraction element 2 away from the first image source 11 is a planar surface, the surface 21 of the refraction element 2 away from the first image source 11 possesses a first included angle with respect to the display surface of the first display area 110, and the first include angle is in a range of 1° ~ 60°, for example, 5° ~ 15°. In this way, the oblique first virtual image 100 possesses an appropriate oblique angle, for example, an included angle between the first virtual image 100 and the ground surface is in a range of 5° ~ 90°, which allows the virtual image to be more closely attached with the ground surface and provides the user with better experience when observing the oblique picture during driving a transportation equipment adopting the display device.

For example, as shown in FIG. 1, an orthographic projection of the refraction element 2 on the display surface of the first display area 110 is located within the first display area 110, for example, the orthographic projection of the refraction element 2 on the display surface of the first display area 110 is located within the at least partial region. For example, as shown in FIG. 1, the orthographic projection of the refraction element 2 on the first display area 110 covers the entire first display area 110, for example, the orthographic projection of the refraction element 2 on the first display area 110 completely covers the at least partial region, so that the image light emitted from the first display area 110 can be more directly incident into the refraction element 2 to improve the light efficiency.

For example, as shown in FIG. 1, the refraction element 2 is attached onto the first display area 110 (for example, attached onto at least partial region of the first display area 110). For example, the refraction element 2 is closely attached onto the first display area 110, for example, the refraction element 2 is closely attached onto the first display area 110 directly or through an optical glue, and there is basically no air layer between the refraction element 2 and the first display area 110. In this way, the image light emitted from the first display area 110 is directly incident on the refraction element 2 without passing through the air layer, which helps in improving the light efficiency.

Alternatively, in some other embodiments, the refraction element includes a portion that is attached onto the first display area 110 (e.g., at least partial region of the first display area 110) and a portion that is spaced apart from the first display area 110 (e.g., at least partial region the first display area 110).

For example, a support member may be arranged between the first display area 110 and the refraction element 2, and the support member may be a light-transmitting sheet covering the first display area 110, such as a glass sheet. The support member is closely attached onto the first display area 110, the refraction element 2 is closely attached onto the support member, so that the first display area 110 and the refraction element 2 are closely attached onto two side surfaces of the support member respectively, which can prevent a heavy refraction generated by the refraction element 2 from damaging the first display area 110 and hence can improve the stability of the device during usage.

For example, the display device further includes a fixing structure (not shown) configured to fix the refraction element 2. For example, the fixing structure is located at an edge of the first image source 11; for example, the fixing structure includes a slot or a buckle for fixing a side edge of the refraction element 2. Alternatively, the refraction element 2 is adhesively attached onto the first image source 11.

For example, in some embodiments, along the direction from the first end of the at least partial region (such as the first display area 110) to the second end of the at least partial region (such as the first display area 110), the refraction index of the refraction element in the direction of the chief light of the image light emitted from the at least partial region gradually decreases.

Illustratively, FIG. 3 is a schematic diagram of another display device provided by at least one embodiment of the present disclosure. The embodiment shown in FIG. 3 has the following differences from the embodiment shown in FIG. 1. For example, in the embodiment shown in FIG. 3, along the direction from the first end e1 of the first display area 110 (for example, the at least partial region) to the second end e2 of the first display area 110, the refraction index of the refraction element 2 gradually decreases, for example, it linearly decreases or nonlinearly decreases. In this case, for example, the thickness of the refraction element 2 in the direction perpendicular to the display surface 20 of the at least partial region remains unchanged. In this way, it can also be realized that, along the direction from the first end e1 of the first display area 110 (for example, the at least partial region) to the second end e2 of the first display area 110, the optical distance of the image light emitted from the first display area 110 gradually decreases during the process from being incident on the refraction element 2 to exiting the refraction element 2, so as to gradually adjust the equivalent object distance of the display surface 20 in the direction from the first end e1 of the first display area 110 to the second end e2 of the first display area 110; as a result, the equivalent object distance of the display surface 20 along this direction gradually increases, and an oblique first virtual image 100 can be obtained.

Other features of the embodiment shown in FIG. 3 are the same as those in FIG. 1, and reference can be made to the description of FIG. 1 without repeating here.

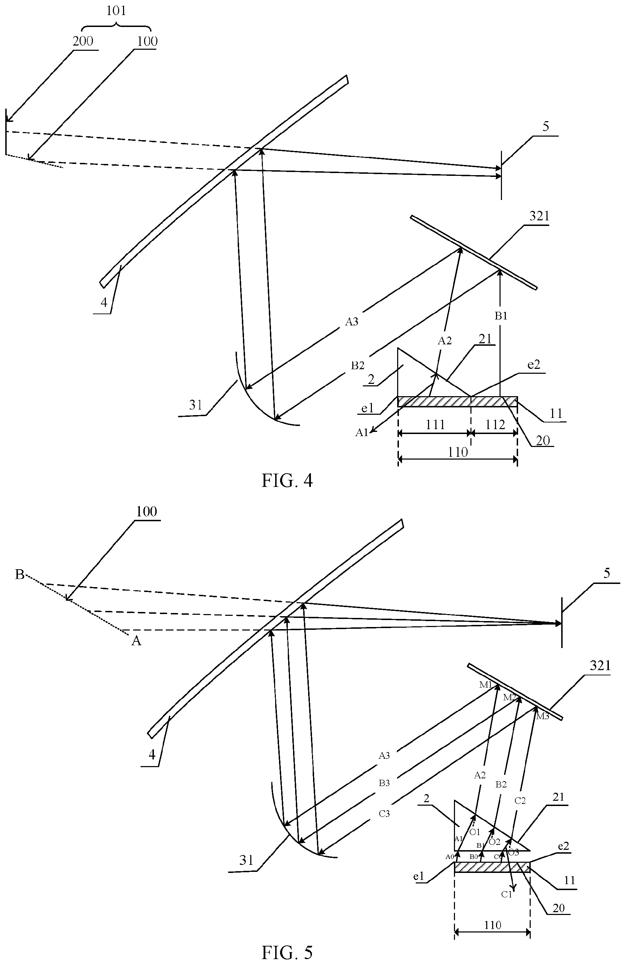

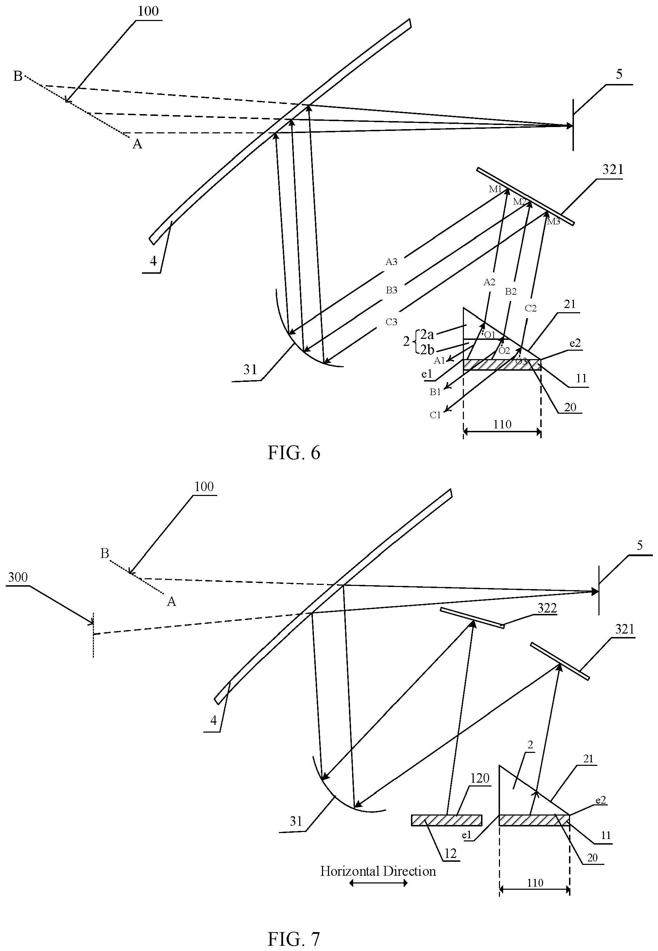

For another example, FIG. 4 is a schematic diagram of another display device provided by at least one embodiment of the present disclosure. The embodiment shown in FIG. 4 has the following differences from the embodiment shown in FIG. 1. As shown in FIG. 6, the first display area 110 includes a first display sub-area 111 and a second display sub-area 112, and the above-descried "at least partial region" refers to the first display sub-area 111. For example, image light emitted from the first display sub-area 111 enters the refraction element 2, and is refracted at an interface between the refraction element 2 and the air and then propagated to the first reflection element 31; the first reflection element 31 is configured to reflect the image light which is emitted from the first display sub-area 111, passes through the refraction element 2 and then reflected towards the first reflection element 31 by the second reflection element 321; the image light reflected by the first reflection element 31 is finally propagated to the observation area 5 to form the first virtual image 100. Moreover, image light emitted from the second display sub-area 112 is incident on the first reflection element 31 without being refracted by the refraction element 2, and the first reflection element 31 is further configured to reflect the image light which is emitted from the second display sub-area 112 and then incident on the first reflection element 31 to the observation area 5 to form a second virtual image 200. The image light emitted from the second display sub-area has the same propagation distance from all positions on a display surface of the second display sub-area 112 to the first reflection element 31, and the second virtual image 200 has a non-zero, second included angle with respect to the first virtual image 100. For example, the first virtual image 100 is an oblique image, and the second virtual image 200 is a vertical image, so as to realize that a part of the displayed image of the first display area 110 is an oblique image. For example, the included angle between the second virtual image 200 and the ground surface is greater than the included angle between the first virtual image 100 and the ground surface.

For example, the second virtual image 200 is a vertical image, which refers to that the second virtual image 200 is vertical with relative to the horizontal direction, for example, the second virtual image 200 is basically perpendicular to the ground surface, for example, the included angle between the second virtual image 200 and the ground surface is 90°±10°. It should be noted that when the included angle between the second virtual image 200 and the ground surface is in a range of 80° -100 °, it can be considered that the second virtual image 200 is basically perpendicular to the ground surface. The horizontal direction may refer to a direction parallel to the ground surface on which the transportation equipment adopting the head-up display travels, or a direction along which the transportation equipment using the head-up display travels. For example, the embodiment of the present disclosure is not limited to the case where the first virtual image is along the oblique direction and the second virtual image is along the vertical direction.

Compared with the case where the image light emitted from the first display area 110 is incident on the first reflection element 31 without being refracted by the refraction element 2, in this embodiment, the display surface 20 of the entire first display area 110 has the same original object distance to the first reflection element 31, and along the direction from the first end e1 of the first display sub-area 111 to the second end e2 of the first display sub-area 111, the degree of reduction of the equivalent object distance from the display surface of the first display sub-area 111 to the first reflection element 3 that is caused by the refraction element 2 gradually decreases; in this way, along the direction from the first end e1 of the first display sub-area 111 to the second end e2 of the first display sub-area 111, the equivalent object distance from the display surface of the first display sub-area 111 to the first reflection element 31 gradually increases; that is, the refraction element 2 is cooperated with the first display sub-area 111 to realize the oblique imaging with the same principles as that of FIG. 1.

For example, as shown in FIG. 4, an orthographic projection of the refraction element 2 on the first display area 110 is located within the first display sub-area 111, so that the image light emitted from the first display sub-area 111 can be more directly incident into the refraction element 2 to improve the light efficiency.

For example, the display surface of the first display sub-area 111 and the display surface of the second display sub-area 112 are in a same plane or in different planes. For example, a displayed content of the second virtual image 200 and a displayed content of the first virtual image 100 are independent of each other or related to each other. For example, the second virtual image 200 and the first virtual image 100 are different images or different parts of the same one image. For example, an optical distance from the first display sub-area 111 to the reflection surface of the first reflection element 31 is different from an optical distance from the second display sub-area 112 to the reflection surface of the first reflection element 31, so that a center of the first virtual image 100 formed by the image light emitted from the first display sub-area 111 is not coincident with a center of the second virtual image 200 formed by the image light emitted from the second display sub-area 112.

For example, the above-mentioned "optical distance" refers to a product of, a propagation distance for the image light during the process from being emitted from the corresponding display area to being propagated to the first reflection element, and the refraction index of the propagation medium. For example, a geometric path for the image light during the process from being emitted from emitted from the first display sub-area 111 to being propagated to the first reflection element 31 includes a part for the image light to pass through the refraction element 2 and another part for the image light to pass through the air.

For example, the second display sub-area 112 is located at a side of the first display sub-area 111 away from the first reflection element 31, and the second virtual image 200 is located at a side of the first virtual image 100 away from the observation area 5. Alternatively, in some other embodiments, the second display sub-area 112 is located at a side of the first display sub-area 111 close to the first reflection element 31, and the second virtual image 200 is located at a side of the first virtual image 100 close to the observation area 5. It can be designed according to requirements.

Other features of the embodiment shown in FIG. 4 are the same as those in FIG. 1, and reference can be made to the description of FIG. 1 without repeating here.

For example, FIG. 5 is a schematic diagram of another display device provided by at least one embodiment of the present disclosure. The embodiment shown in FIG. 5 has the following differences from the embodiment shown in FIG. 1. As shown in FIG. 5, the refraction element 2 is spaced apart from the first display area 110 (e.g., the at least partial region) in a direction perpendicular to the display surface of the first display area 110. For example, there is an air layer between the refraction element 2 and the display surface of the first display area 110, and image light rays emitted from the first display area 110 such as light rays A0, B0 and C0 are incident on the refraction element 2 after passing through the air layer, then the light rays A0, B0 and C0 are refracted at the surface 21 of the refraction element 2 away from the display surface 20 of the first display area 110 as light rays A1, B1 and C1; the image light rays being refracted exit through the surface 21 of the refraction element 2 away from the display surface of the first display area 110, and then are incident on the first reflection element 31, as indicated by light rays A2, B2 and C2, as well as light rays A3, B3 and C3, respectively.

For example, in the embodiment shown in FIG. 5, a lower surface of the refraction element 2 close to the first image source 11 is parallel to the display surface 20 of the first display area 110. In some other embodiments, the lower surface of the refraction element 2 close to the first image source 11 may not be parallel to the display surface 20 of the first display area 110; in this case, along the direction from the first end e1 of the at least partial region to the second end e2 of the first display area 110, the optical distance of the image light emitted at the same angle from the display surface 20 of the first display area 110 gradually decreases during the process from being incident on the refraction element 2 through the lower surface thereof close to the first image source 11 to exiting the refraction element 2 through the lower surface thereof away to the first image source 11, and for example, the optical distance may be continuously and gradually reduced. For example, along the direction from the first end e1 of the first display area 110 to the second end e2 of the first display area 110, the refraction index of the refraction element 2 remains unchanged, and the thickness of the refraction element 2 in the direction of chief light of the image light emitted from the first display area 110 gradually decreases, for example, it linearly decreases firstly and then nonlinearly decreases. Alternatively, in some embodiments, along the direction from the first end e1 of the first display area 110 to the second end e2 of the first display area 110, the refraction index of the refraction element 2 gradually decreases, for example, it linearly decreases firstly and then nonlinearly decreases, and in this case, for example, the thickness of the refraction element 2 in the direction of chief light of the image light emitted from the first display area 110 remains unchanged. Alternatively, along the direction from the first end e1 of the first display area 110 to the second end e2 of the first display area 110, the refraction index of the refraction element 2 and the thickness of the refraction element 2 in the direction of chief light of the image light emitted from the first display area 110 are non-monotonically changed, so that along the direction from the first end e1 of the first display area 110 to the second end e2 of the first display area 110, the optical distance of the image light emitted at the same angle from the display surface 20 of the first display area 110 gradually decreases during the process from being incident on the refraction element 2 through the lower surface thereof close to the first image source 11 to exiting the refraction element 2 through the lower surface thereof away from the first image source 11.

Other features of the embodiment shown in FIG. 5 are the same as those in FIG. 1, and reference can be made to the description of FIG. 1.

For example, FIG. 6 is a schematic diagram of another display device provided by at least one embodiment of the present disclosure. The embodiment shown in FIG. 6 has the following differences from the embodiment shown in FIG. 1. As shown in FIG. 6, the refraction element 2 includes a plurality of refraction sub-elements stacked in a direction perpendicular to the display surface 20 of the first display area 110. For example, the refraction element 2 includes a first refraction sub-element 2a and a second refraction sub-element 2b adjacent to each other. For example, the first refraction sub-element 2a and the second refraction sub-element 2b are stacked in the direction perpendicular to the display surface 20 of the first display area 110 and are in contact with each other. For example, along the direction from the first end e1 of the first display area 110 to the second end e2 of the first display area 110, the optical distance of the image light emitted from the first display area 110 gradually decreases during the process from being incident on the whole structure (for example, the second refraction element 2 as a whole) composed of the plurality of refraction sub-elements that are stacked to exiting the whole structure. In this way, along the direction from the first end e1 of the first display area 110 to the second end e2 of the first display area 110 (for example, or, in this embodiment, along the direction from being close to the first reflection element 31 to being away from the first reflection element 31), the degree of reduction of the object distance from the display surface 20 of the first display area 110 to the first reflection element 31 gradually decreases, so that the equivalent object distance from the display surface 20 of the first display area 110 to the first reflection element 31 along this direction gradually increases, and that the oblique first virtual image 100 can be obtained.

For example, materials of the plurality of refraction sub-elements may be different, so as to have different refractive indices. For example, the first refraction sub-element 2a and the second refraction sub-element 2b have different materials, and hence have different refractive indices. By adopting the above solution that the refraction element 2 includes a plurality of refraction sub-elements that are stacked, the refraction index of the refraction element 2 can be flexibly adjusted, so as to satisfy the requirements of various refractive indices, compensate for the insufficient range of refraction index of a single-layered refraction element made of a single material, and broaden the adjustment range of the image light emitted from the first display area 110.

For example, in some embodiments, as shown in FIG. 6, along the direction from the first end e1 of the first display area 110 to the second end e2 of the first display area 110, the refraction index of the refraction element 2 composed of a plurality of stacked refraction sub-elements as a whole remains unchanged, and the thickness of the refraction element 2 composed of a plurality of stacked refraction sub-elements as a whole in the direction perpendicular to the display surface of the first display area 110 gradually decreases. In this case, for example, the surface 21 of the refraction sub-element 2 farthest away from the display surface of the second display sub-area 112 among the plurality of refraction sub-elements 2, which surface is away from the display surface 20 of the first display area 110, is a planar surface or a curved surface. For details, reference can be made to the previous description.

Alternatively, in some other embodiments, along the direction from the first end e1 of the first display area 110 to the second end e2 of the first display area 110, the refraction index of the refraction element 2 composed of a plurality of stacked refraction sub-elements as a whole gradually decreases, and the thickness of the refraction element 2 composed of a plurality of stacked refraction sub-elements in the direction perpendicular to the display surface of the second display sub-area 112 as a whole remains unchanged. For example, the plurality of stacked refraction sub-elements may be configured to have different refractive indices. For example, for the first refraction sub-element and the second refraction sub-element included in the refraction element that are stacked and adjacent to each other in the direction perpendicular to the display surface of the second display sub-area 112, a refraction index of the first refraction sub-element is smaller than that of the second refraction sub-element; and along the direction from the first end e1 of the first display area 110 to the second end e2 of the first display area 110, a thickness of the first refraction sub-element in the direction perpendicular to the display surface of the second display sub-area 112 gradually increases while a thickness of the second refraction sub-element in the direction perpendicular to the display surface of the second display sub-area 112 gradually decreases, and a shape of a surface of the first refraction sub-element in contact with the second refraction sub-element is complementary with a shape of a surface of the second refraction sub-element in contact with the first refraction sub-element; in this way, it can realize that along the direction from the first end e1 of the first display area 110 to the second end e2 of the first display area 110, the refraction index of the structure composed of a plurality of stacked refraction elements as a whole gradually decreases, and the thickness of the structure composed of a plurality of stacked refraction elements in the direction perpendicular to the display surface of the second display sub-area 112 as a whole remains unchanged. For example, there may be other ways to realize this solution, and the above is merely an exemplary implementation.

Other features of the embodiment shown in FIG. 6 are the same as those in FIG. 1, and reference can be made to the description of FIG. 1.

FIG. 7 is a schematic diagram of another display device provided by at least one embodiment of the present disclosure. The embodiment shown in FIG. 7 has the following differences from the embodiment shown in FIG. 2A. As shown in FIG. 7, the display device further includes a second image source 12; the second image source 12 includes a second display area 120, and image light emitted from the second display area 120 is propagated to the first reflection element 31. For example, the image light emitted from the second display area 120 and then propagated to the first reflection element 31 forms a third virtual image 300 different from the first virtual image 100, and an optical distance from a display surface of the second display area 120 to the first reflection element 31 is not equal to an optical distance from the display surface of the first display area 110 to the first reflection element 31, so that the third virtual image 300 and the first virtual image 100 have different distances from the user, and that a multi-layer display is realized. Moreover, the display surface of the first display area 110 is parallel to the display surface of the second display area 120, for example, both the display surface of the first display area 110 and the display surface of the second display area 120 may be parallel to the above-mentioned horizontal direction. For example, an included angle between the third virtual image 300 and the ground surface is greater than an included angle between the first virtual image 100 and the ground surface.

For example, the optical distance from the display surface to the first reflection element 31 may be an optical distance from a center of the display surface to a center (e.g., an optical center) of the first reflection element 31. For example, the optical distance from the display surface of the first display area 110 to the first reflection element 31 may be the optical distance from the center of the display surface of the first display area 110 to the center of the first reflection element 31. The optical distance from the display surface of the second display area 120 to the first reflection element 31 may be the optical distance from the center of the display surface of the second display area 120 to the center of the first reflection element 31.

For example, the third virtual image 300 may be a virtual image that is not completely the same as the first virtual image 100. For example, these two virtual images are different in at least one selected from a group consisting of the position, size, oblique degree and image content.

For example, no refraction element is provided for the second image source 12, and image light emitted from the second display area 120 of the second image source 12 is propagated to the first reflection element 31 without passing through any refraction element; for example, the third virtual image 300 is a vertical image, and for example, the third virtual image 300 is vertical with respect to the horizontal direction, for example, the horizontal direction is perpendicular to the horizontal direction. The horizontal direction may refer to a direction perpendicular to a plane where the observation area 5 is located, or a direction parallel to the ground surface along which the transportation equipment using the head-up display travels, or a direction along which the transportation equipment adopting the head-up display travels. For example, the embodiment of the present disclosure is not limited to the case where the first virtual image is along the oblique direction and the third virtual image is along the vertical direction. For example, in some other embodiments, the second display area may be arranged obliquely, for example, the second display area has a non-zero included angle with respect to the display surface of the first display area 11 shown in FIG. 7, so that the second virtual image is also an oblique virtual image. Alternatively, in some other embodiments, a refraction element similar to that provided for the first image source 11 may also be provided for the second image source 12, so that the second virtual image is also an oblique virtual image. An angle of each image in the multi-layer display can be designed as required, which is not limited in the embodiment of the present disclosure.

For example, as shown in FIG. 7, the display device further includes a third reflection element 322, and the third reflection element 322 is configured such that the image light emitted from the second display area 120 is propagated to the first reflection element 31 after being reflected by the third reflection element 322. In some other embodiments, there may be no other optical element between the second display area 120 and the first reflection element 31, for example, no third reflection element 322 is provided; and the image light emitted from the second display area 120 may be directly incident on the first reflection element 31. In addition, FIG. 7 schematically shows that there is no other optical element between the second display area 120 and the third reflection element 322, and the image light emitted from the second display area 120 is directly incident on the third reflection element 322. However, the present disclosure is not limited to this case, other optical elements, such as lenses, may also be arranged between the second display area 120 and the third reflection element 322. For example, the image light emitted from the second display area 120 may be incident on the third reflection element 322 after being processed by the other optical elements.

For example, in the embodiment shown in FIG. 7, the first display area 110 is located at a side of the second display area 120 away from the first reflection element 31, and the third reflection element 322 is located at a side of the second reflection element 321 away from the first reflection element 31; alternatively, the first display area 110 is located at a side of the second display area 120 close to the first reflection element 31, and the third reflection element 322 is located at a side of the second reflection element 321 close to the first reflection element 31.

In at least one embodiment of the present disclosure, by adjusting a distance between the second reflection element 321 and each of the first display area 110 and the first reflection element 31 as well as a distance between the third reflection element 322 and each of the second display area 120 and the first reflection element 31, it can be realized that a distance from the display surface of the second display area 120 to the first reflection element 31 is not equal to a distance from the display surface of the first display area 110 to the first reflection element 31 (alternatively, a propagation distance of the image light during the process from being emitted from the display surface of the second display area 120 to being propagated to the first reflection element 31 is not equal to a propagation distance of the image light during the process from being emitted from the display surface of the first display area 110 to being propagated to the first reflection element 31), and it can be realized that an optical distance of the image light emitted from the first display area 110 and then propagated to the first reflection element 31 is not equal to an optical distance of the image light emitted from the second display area 120 and then propagated to the first reflection element 31.

For example, as shown in FIG. 7, the reflection surface of the first reflection element 31 is a curved surface, and reflection surfaces of the second reflection element 321 and the third reflection element 322 are planar surfaces.

For example, the first display area 110 and the second display area 120 can display different images to satisfy the requirements of user who wants to watch different images. The embodiment of the present disclosure is not limited to this case, for example, at least part of at least two display areas may also display the same image.

For other features and technical effects of the embodiment shown in FIG. 7, reference can be made to the previous description of FIG. 1.

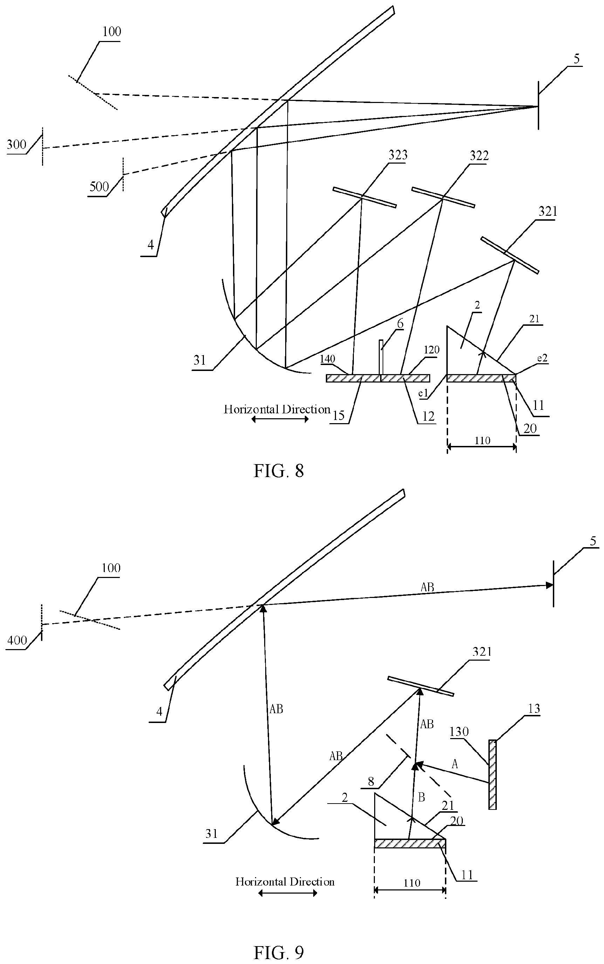

FIG. 8 is a schematic diagram of another display device provided by at least one embodiment of the present disclosure. The embodiment shown in FIG. 8 has the following differences from the embodiment shown in FIG. 7. As shown in FIG. 8, the display device further includes a fifth image source 14 and a fifth reflection element 323. The fifth image source 14 includes a fifth display area 15, and a display surface of the fifth display area 15 has a non-zero, third included angle with respect to the display surface of the first display area 110. The third reflection element 322 is configured to reflect the image light emitted from the second display area 120 to the first reflection element 31, and the fifth reflection element 323 is configured to reflect image light emitted from the fifth display area 15 to the first reflection element 31.

For example, as shown in FIG. 8, a distance from the display surface of the second display area 120 to the first reflection element 31 is not equal to a distance from the display surface of the fifth display area 15 to the first reflection element 31 (alternatively, a propagation distance of the image light during the process from being emitted from the display surface of the second display area 120 to being propagated to the first reflection element 31 is not equal to a propagation distance of the image light during the process from being emitted from the display surface of the fifth display area 15 to being propagated to the first reflection element 31), so that a third virtual image 300 and a fifth virtual image 500 respectively formed by the image light reflected by the first reflection element 31 have different distances from the user. In this case, the image light emitted from the second display area 120 and the image light emitted from the fifth display area 15 are reflected to the first reflection element 31 by the third reflection element 322 and the fifth reflection element 323, respectively. In this reflection optical path, the image light emitted from the second display area 120 and the image light emitted from the fifth display area 15 have different optical distances. In some other embodiments, a propagation distance of the image light during the process from being emitted from the display surface of the second display area 120 to being propagated to the first reflection element 31 may be equal to a propagation distance of the image light during the process from being emitted from the display surface of the first display area 110 to being propagated to the first reflection element 31, so as to realize a single-layer display in which, for example, the third virtual image 300 and the fifth virtual image 500 have the same distance from the user; and in this case, the image light emitted from the second display area 120 and then propagated to the first reflection element 31, and the image light emitted from the first display area 110 and then propagated to the first reflection element 31 have the same optical distance.

For example, in FIG. 8, the display surface of the fifth display area 15 is parallel to the display surface of the second display area 120, so that the virtual image formed by the image light emitted from the display surface of the fifth display area 15 and then reflected by the second reflection element is substantially parallel to the virtual image formed by the image light emitted from the second display area 120 and then reflected by the second reflection element. For example, an included angle between a reflection surface of the fifth reflection element 323 and a reflection surface of the third reflection element 322 is not greater than 20°, so that the virtual image formed by the image light emitted from the fifth display area 15 and then reflected by the first reflection element and the virtual image formed by the image light emitted from the second display area 120 and then reflected by the first reflection element have excellent parallelism therebetween. The present disclosure is not limited to this case, and in the case where the display surface of the fifth display area 15 is parallel to the display surface of the second display area 120, the included angle between the reflection surface of the fifth reflection element 323 and the reflection surface of the third reflection element 322 may be greater than 20°; in this case, a non-zero included angle is formed between the virtual image formed by the image light emitted from the fifth display area 15 and then reflected by the first reflection element 31 and the virtual image formed by the image light emitted from the second display area 120 and then reflected by the first reflection element 31. For example, in the case where the reflection surface of the fifth reflection element 323 is parallel to the reflection surface of the third reflection element 322, an included angle between the display surface of the fifth display area 15 and the display surface of the second display area 120 may be not greater than 20°.

For example, as shown in FIG. 8, the included angle between the reflection surface of the third reflection element 322 and the reflection surface of the fifth reflection element 323 is not greater than 15°. For example, the included angle between the reflection surface of the third reflection element 322 and the reflection surface of the fifth reflection element 323 is not greater than 10°. For example, the included angle between the reflection surface of the third reflection element 322 and the reflection surface of the fifth reflection element 323 is not greater than 5°. For example, the included angle between the reflection surface of the third reflection element 322 and the reflection surface of the fifth reflection element 323 is 0°. For example, the reflection surface of the third reflection element 322 and the reflection surface of the fifth reflection element 323 may be arranged in parallel.

For example, the third reflection element 322 and the fifth reflection element 323 can be planar reflection mirrors, and the above-mentioned "the included angle between the reflection surface of the third reflection element 322 and the reflection surface of the fifth reflection element 323 is not greater than 15°" may refer to that an included angle between the two planar reflection surfaces is not greater than 15°.

For example, the third reflection element 322 and the fifth reflection element 323 can also be one or more selected from a group consisting of curved reflection mirrors, aspherical mirrors and spherical mirrors, and the above-mentioned "the included angle between the reflection surface of the third reflection element 322 and the reflection surface of the fifth reflection element 323 is not greater than 15°" may refer to that an included angle between planes surrounded by edges of the respective reflection surfaces is not greater than 15°.

For example, the third reflection element 322 and the fifth reflection element 323 may be reflection mirrors of the same type or reflection mirrors of different types. At least one embodiment of the present disclosure schematically shows that the third reflection element 322 and the fifth reflection element 323 may both be planar reflection mirrors. By adopting the planar reflection mirrors, the manufacture of the display device can be facilitated, the optical path inside the display device can be folded to save the space, and additional distortion and size change of the image displayed by the display device can also be avoided.

For example, as shown in FIG. 8, the second display area 120 and the fifth display area 15 can be located in a same plane; in this way, by adjusting the positions and angles of the third reflection element 322 and the fifth reflection element 323, it can be realized that an optical distance of the image light emitted from the second display area 120 and then propagated to the first reflection element 31 is not equal to an optical distance of the image light emitted from the fifth display area 15 and then propagated to the first reflection element 31. The embodiment of the present disclosure is not limited to this case. In some other embodiments, for example, the second display area and the fifth display area can also be located in different planes, and the third reflection element and the fifth reflection element are located in the same plane (or different planes); in this way, by adjusting the positions of the second display area and the fifth display area, it can be realized that a distance from the display surface of the second display area 120 to the first reflection element 31 is not equal to a distance from the display surface of the fifth display area 15 to the first reflection element 31, and that both a propagation distance and an optical distance of the image light emitted from the second display area 120 and then propagated to the first reflection element 31 are respectively not equal to a propagation distance and an optical distance of the image light emitted from the fifth display area 15 and then propagated to the first reflection element 31.

In the display device shown in FIG. 8, a distance from the display surface of the first display area 110 to the first reflection element 31, a distance from the display surface of the second display area 120 to the first reflection element 31, and a distance from the display surface of the fifth display area 15 to the first reflection element 31 are different from each other, thus, it may be considered that a propagation distance of the image light during the process from being emitted from the display surface of the first display area 110 to being propagated to the first reflection element 31, a propagation distance of the image light during the process from being emitted from the display surface of the second display area 120 to being propagated to the first reflection element 31, and a propagation distance of the image light during the process from being emitted from the display surface of the fifth display area 15 to being propagated to the first reflection element 31 are different from each other, so that images can be formed at different distances from the observation area 5, which is helpful for the images at different distances to be matched and fused with real scenes at different distances. Therefore, when the display device is applied to a head-up display, the user does not need to switch back and forth between images with a fixed distance from the user and real scenes with different distances from the user, thereby avoiding a conflict of visual convergence adjustment and improving the usage experience of the display device. In this case, for example, optical distances of the image light emitted from the first display area 110, the second display area 120 and the fifth display area 15 and respectively propagated to the first reflection element 31 are different from each other. In at least one embodiment of the present disclosure, by adjusting a distance between the second reflection element 321 and each of the first display area 110 and the first reflection element 31, a distance between the third reflection element 322 and each of the second display area 120 and the first reflection element 31, and a distance between the fifth reflection element 323 and each of the fifth display area 15 and the first reflection element 31, it can be realized that the display surfaces of the three display areas have different distances from the first reflection element 31, that the propagation distances of the image light during the process from being emitted from the respective display surfaces of the three display areas to being propagated to the first reflection element 31 are different from each other, and that the optical distances of the image light emitted from the three display areas and then respectively propagated to the first reflection element 31 are different from each other.

For example, FIG. 8 schematically shows that the first virtual image 100 is an oblique virtual image, and a distance between the first virtual image 100 and the observation area 5 is larger than a distance between the fifth virtual image 500 and the observation area 5, and is smaller than a distance between the third virtual image 300 and the observation area 5. For example, the first virtual image 100 is located between the fifth virtual image 500 and the third virtual image 300. However, it is not limited to this case, and the oblique virtual image may also be the virtual image with the farthest distance from the observation area or the virtual image with the shortest distance from the observation area, which is not limited in the embodiment of the present disclosure.

For example, as shown in FIG. 8, the first virtual image 110 is oblique relative to the horizontal direction, for example, it has a non-zero and non-right included angle with respect to the horizontal direction; the third virtual image 300 and the fifth virtual image 500 are vertical with relative to the horizontal direction, for example, perpendicular to the horizontal direction. The horizontal direction may refer to a direction perpendicular to a plane where the observation area 5 is located, or a direction parallel to the ground surface on which the transportation equipment using the head-up display travels. For example, the embodiment of the present disclosure is not limited to the case where the first virtual image is along the oblique direction, and the second virtual image and the fifth virtual image are along the vertical direction. For example, one of the second virtual image and the fifth virtual image may also be an oblique virtual image; for example, along a direction from the virtual image to the observation area, the virtual image faces the observation area and is oblique towards the observation. For example, in some other embodiments, at least one of the display surface of the second display area and the display surface of the fifth display area may be arranged obliquely, for example, arranged obliquely at an angle as same as or different from that of the display surface of the first display area 11 shown in FIG. 8, so that a virtual image formed by the light emitted from at least one of the second display area and the fifth display area can be an oblique image. Alternatively, in some other embodiments, a refraction element similar to that corresponding to the first image source 1 may be provided for at least one of the second image source 12 and the fifth image source 14, so that a virtual image formed by the light emitted from at least one of the second display area and the fifth display area can be an oblique image.

For example, as shown in FIG. 8, for example, the second display area 120 and the fifth display area 15 may be display areas located at different positions on one same image source, for example, by dividing the one same screen into different display areas so as to save space and cost. The embodiment of the present disclosure is not limited to this case. In some other embodiments, the second display area and the fifth display area may be located on different image sources, for example, screens of different image sources may be tightly close to each other; for example, display surfaces of different image sources are parallel to each other, so that the second display area is parallel to the fifth display area, and that a distance between different image sources may be set relatively larger to prevent image light emitted by the two display areas from interacting with each other.

For example, as shown in FIG. 8, by providing a light shielding structure 6 between the second display area 120 and the fifth display area 15, it can prevent the image light emitted by different display areas from interacting with each other. For example, the light shielding structure 6 may be a light shielding plate.

For example, the second image source 12 or the fifth image source 14 may include the light shielding structure 6 as mentioned above, but it is not limited to this case, and the light shielding structure may not be a structure of the second image source 12 or the fifth image source 14. For example, the light shielding structure 6 may be located at a display side of the second image source 12 or the fifth image source 14, for example, at least arranged/installed/attached onto (for example, it can be fitted to, fixed to, closely attached to, adhered to or adsorbed to) a display screen of the second image source 12 or the fifth image source 14; the light shielding structure 6 is located at a connection position of the second image source 12 and the fifth image source 14, for example.

For example, as shown in FIG. 8, the third reflection element 322 and the fifth reflection element 323 may be two reflection elements independent of each other, so as to be adjusted independently.

For example, the second reflection element 321, the third reflection element 322 and the fifth reflection element 323 may be reflection mirrors of the same type or reflection mirrors of different types. At least one embodiment of the present disclosure schematically shows that the second reflection element 321, the third reflection element 322 and the fifth reflection element 323 may all be planar reflection mirrors.

For example, in the embodiment shown in FIG. 8, the fifth display area 15 may display a close-view image, for example, displaying critical driving data such as instruments in the vehicle, for example, one or more parameters of speed of the vehicle, fuel quantity and steering of the vehicle. The second display area 120 may display a distant-view image, such as a building. For example, the distant-view image displayed in the second display area 120 may include an icon of point of interests (POI). For example, the image may include a bank logo, and the image of the bank logo may be matched and fused with the location of the real scene of the bank, so that when the user can see a distant building, such as a bank, the bank logo will be identified in the displayed image.

For example, in the embodiment shown in FIG. 8, the fifth display area 15 is configured to display a close-view image, and a displayed content of the close-view image may be critical driving parameters such as instruments in the vehicle, so that the size of the displayed close-view image can be smaller. The second display area 120 is configured to display a distant-view image, and a displayed content of the distant-view image can be matched and fused with the real scene outside the car, such as a building, so that the size of the displayed distant-view image is larger than that of the close-view image. For example, a close-view image with a smaller size will not block a distant-view image with a larger size.

For example, in the embodiment shown in FIG. 8, the display surface of the fifth display area 15 is parallel to the display surface of the second display area 120, and both the display surfaces of the fifth display area 15 and the second display area 120 may be parallel to the display surface of the first display area 110; for example, the display surfaces of the first display area 110, the second display area 120 and the fifth display area 15 may all be parallel to the above-mentioned horizontal direction. Furthermore, an included angle between the reflection surface of the third reflection element 322 and the reflection surface of the fifth reflection element 323 is not greater than 20°, and an included angle between the display surface of the fifth display area 15 and the display surface of the first display area 110 is in a range of 5° ~ 90°. Therefore, the fifth virtual image 500 formed by the image light emitted from the display surface of the fifth display area 15 and then reflected by the first reflection element 31 is substantially parallel to the fifth display area 15 formed by the image light emitted from the second display area 120 and reflected by the first reflection element 31, while the first virtual image 100 formed by the image light emitted from the first display area 110 and then reflected by the reflection element 31 is not parallel to the fifth virtual image 500 formed by the image light emitted from the fifth display area 15 and then reflected by the first reflection element 31, for example, an included angle between the first virtual image 100 and the fifth virtual image 500 may be in a range of 5° ~ 90°.

For other features and technical effects of the embodiment shown in FIG. 8, reference can be made to the previous description of FIG. 7.

FIG. 9 is a schematic diagram of another display device provided by at least one embodiment of the present disclosure. The embodiment shown in FIG. 9 has the following differences from the embodiment shown in FIG. 1. As shown in FIG. 9, for example, the display device further includes a third image source 13 and a transflective element 8. The third image source 13 includes a third display area 130; a display surface of the third display area 130 has a non-zero third included angle with respect to the display surface of the first display area 110. The transflective element 8 is located at a side of the refraction element 2 away from the first image source 11, and is configured to transmit the image light emitted from the first display area 110 to the first reflection element 31 and configured to reflect the image light emitted from the third display area 130; and image light emitted from the third display area 130 is propagated to the first reflection element after being reflected by the transflective element 8. The image light emitted from the third display area 130 and then propagated to the first reflection element 31 forms a fourth virtual image 400 which is different from the first virtual image 100. The first virtual image 100 and the fourth virtual image 400 are at least partly overlapped, for example, the first virtual image 100 and the fourth virtual image 400 observed by the user's eyes in the observation area 5 are at least partly overlapped, which can enable the first virtual image 100 and the fourth virtual image 400 to be coaxial. For example, a path of the image light that forms the first virtual image 100 and is directly incident to the observation area 5 is basically coincident with a path of the image light that forms the fourth virtual image 400 and is directly incident to the observation area 5, so that the first virtual image 100 and the fourth virtual image 400 can be coaxial. For example, the first virtual image 100 and the fourth virtual image 400 are observed by the user's eyes in the observation area 5 at basically the same viewing angle (e.g., a lower viewing angle, a top viewing angle, and an included angle between the sight line of the user and the horizontal direction).

For example, by adjusting refractive indices of materials of the transflective element 8 and the refraction element 2, the magnitude of the first included angle between the surface 21 of the refraction element 2 away from the first image source 11 and the display surface 20 of the first display area 110, the included angle between the transflective element 8 and the display surface of the third display area 130, the distance between the transflective element 8 and the display surface of the first display area 110, and the distance between the transflective element 8 and the display surface of the third display area 130, a light ray B emitted from the first display area 110 and then transmitted by the transflective element 8 is at least partly coincident with a light ray A emitted from the third display area 130 and then reflected by the transflective element 8 to form a light ray AB, the light ray AB is propagated to the first reflection element 31 and reflected by the first reflection element 31, in which the light ray B reflected by the first reflection element 31 forms the first virtual image 100 and the light ray A reflected by the first reflection element 31 forms the fourth virtual image 400, and the first virtual image 100 and the fourth virtual image 400 are at least partly overlapped.

For example, an orthographic projection of the first virtual image 100 on a plane where the fourth virtual image 400 is located is within a range of the fourth virtual image 400, for example, when observed by the user's eyes in the observation area 5, the orthographic projection of the first virtual image 100 on the plane where the fourth virtual image 400 is located is within the range of the first virtual image 100. Alternatively, an orthographic projection of the fourth virtual image 400 on a plane where the first virtual image 100 is located is within a range of the first virtual image 100, for example, when observed by the user's eyes in the observation area 5, the orthographic projection of the fourth virtual image 400 on the plane where the first virtual image 100 is located is within the range of the first virtual image 100.

For example, a center of the first virtual image 100, a center of the fourth virtual image 400, and a center of an eyebox area are located on a same straight line, so that when observed by the user's eyes in the observation area 5, the center of the first virtual image 100 coincides with the center of the fourth virtual image 400.

For example, by adjusting an included angle between the transflective element 8 and the display surface of the first display area 110, an included angle between the transflective element 8 and the display surface of the third display area 130, a distance between the transflective element 8 and the display surface of the first display area 110, and a distance between the transflective element 8 and the display surface of the third display area 130, it can be realized that the orthographic projection of the first virtual image 100 on the plane where the fourth virtual image 400 is located is within the range of the fourth virtual image 400, or the orthographic projection of the fourth virtual image 400 on the plane where the first virtual image 100 is located is within the range of the first virtual image 100, or the center of the first virtual image 100, the center of the fourth virtual image 400 and the center of the observation area 5 are located on the same straight line.

For example, the third image source 13 includes a third display area 130; a display surface of the third display area 130 has a non-zero third included angle with respect to the display surface of the first display area 110; and the first virtual image 100 is parallel to the fourth virtual image 400 or has a non-zero second included angle with respect to the fourth virtual image 400. For example, the value of the third included angle may be equal to the value of the fourth included angle. In some embodiments, the value of the third included angle may be not equal to the value of the fourth included angle.

For example, a distance from the display surface of the first display area 110 to the first reflection element 31 is not equal to a distance from the display surface of the third display area 130 to the first reflection element 31; alternatively, a propagation distance of the image light emitted from the display surface of the first display area 110 during the process of being propagated from the display surface of the first display area 110 to the first reflection element 31 is not equal to a propagation distance of the image light emitted from the display surface of the third display area 130 during the process of being propagated from the display surface of the third display area 130 to the first reflection element 31. In this way, a multi-layer display is realized. For example, the first virtual image 100 and the fourth virtual image 400 have different distances from the user (such as a driver of the transportation equipment using the display device). In this case, the image light emitted from the first display area 110 and then propagated to the first reflection element 31, and the image light emitted from the third display area 130 and then propagated to the first reflection element 31 have different optical distances, and hence can be imaged at different distances from the user, so that multiple layers of images having different distances from the user can be formed. For example, the first virtual image 100 and the fourth virtual image 400 are located in different layers, and different images can be fused with the real scenes located at different distances from the user, so that sight line of the user has no need of switching back and forth between images with a fixed distance from the user and real scenes with different distances from the user, which effectively improves the usage experience of the head-up display.

For example, the reflectivity of the transflective element 8 to the image light emitted from the first display area 110 may be 70%, 60%, 50% or other suitable values, and the transmissivity of the transflective element 8 to the image light emitted from the third display area 130 may be 30%, 40%, 50% or other suitable values. For example, the transmissivity of the transflective element 8 to the image light emitted from the third display area 130 may be 70%, 60%, 50% or other suitable values.

For example, the transflective element 8 includes a polarizing transflective element 8, the third display area 130 emits first polarized light (polarized light with a first polarization), the first display area 110 emits second polarized light (polarized light with a second polarization), and the polarization direction of the first polarized light is perpendicular to the polarization direction of the second polarized light. The transflective element 8 is configured to reflect the first polarized light and transmit the second polarized light. For example, the first display area 110 emits the second polarized light which can be transmitted through the transflective element 8.

For example, the polarizing transflective element 8 may be an element formed by performing film coating on a transparent substrate or pasting a film on a transparent substrate. For example, the polarizing transflective element 8 may be formed by coating or pasting a transflective film with the characteristics of reflecting the first polarized light and transmitting the second polarized light on a base substrate, such as one or more of a dual brightness enhancement film (DBEF) or a brightness enhancement film (BEF). The embodiment of the present disclosure is not limited to this case, for example, the transflective element 8 may also be an integrated element.

For example, the polarizing transflective element 8 may be an optical film with polarizing transflective function. For example, the polarizing transflective element 8 may be composed of a plurality of films with different refractive indices which are stacked in a certain order, and a thickness of each of these films is in a range of about 10 nm ~ 1000 nm; a material of the film may be selected from inorganic dielectric materials, such as one or more of metal oxides and metal nitrides, etc., and may also be selected from polymer materials, such as one or more of polypropylene, polyvinyl chloride and polyethylene, etc.

For example, one of the first polarized light and the second polarized light includes light in the polarization state of S, and the other one of the first polarized light and the second polarized light includes light in the polarization state of P. For example, an included angle between polarization directions of the first polarized light and the second polarized light may be approximately 90°. The embodiments of the present disclosure are not limited to this case. For example, under the condition that the polarization direction of the first polarized light is perpendicular to the polarization direction of the second polarized light, the first polarized light and the second polarized light may not be the light in the polarization state of S or light in the polarization state of P, for example, the first polarized light and the second polarized light may be two kinds of linearly polarized light with polarization directions perpendicular to each other, or two kinds of circularly polarized light with polarization directions perpendicular to each other, or two kinds of elliptically polarized light with polarization directions perpendicular to each other.

For example, the transflective element 8 is a wavelength selective transflective element 8; a waveband of the image light emitted from the third display area 130 is regarded as a first waveband group, and a waveband of the image light emitted from the first display area 110 regarded as a second waveband group; and the transflective element 8 is configured to reflect the image light with the first waveband group and transmit the image light with the second waveband group.

For example, the above-mentioned "waveband" may include a single wavelength or a mixed range of multiple wavelengths. For example, in the case where the waveband includes a single wavelength, the light with this wavelength may be mixed with the light of wavelengths nearby the above single wavelength due to the influence of manufacturing process errors.

For example, both the image light with the above-mentioned first waveband group and the image light with the above-mentioned second waveband group may include light of three wavebands of red light, green light and blue light (RGB), and a full width at half maximum (FWHM) of light of each of the three wavebands of RGB is not greater than 50 nm. For example, the image light with the first waveband group and the image light with the second waveband group may both include image light of three wavebands; for example, among the three wavebands, the peak of the first waveband is in the range of 410 nm ~ 480 nm, the peak of the second waveband is in the range of 500 nm ~ 565 nm, and the peak of the third waveband is in the range of 590 nm ~ 690 nm.

For example, a wavelength of image light of the first waveband in the first waveband group is different from a wavelength of image light of the first waveband in the second waveband group; a wavelength of image light of the second waveband in the first waveband group is different from a wavelength of image light of the second waveband in the second waveband group; and a wavelength of image light of the third waveband in the first waveband group is different from a wavelength of the third waveband in the second waveband group.

For example, the wavelength of image light of each waveband in the first waveband group may be smaller than the wavelength of image light of the corresponding waveband in the second waveband group. For example, in the first waveband group, the wavelength of red light is 620 nm, the wavelength of green light is 500 nm, and the wavelength of blue light is 450 nm. For example, in the second waveband group, the wavelength of red light is 650 nm, the wavelength of green light is 530 nm, and the wavelength of blue light is 470 nm. The embodiment of the present disclosure is not limited to this case. For example, the wavelength of the image light of each waveband in the first waveband group may be greater than the wavelength of the image light of the corresponding waveband in the second waveband group. For example, in the first waveband group, the wavelength of red light is 670 nm, the wavelength of green light is 550 nm, and the wavelength of blue light is 470 nm. For example, in the second waveband group, the wavelength of red light is 650 nm, the wavelength of green light is 530 nm, and the wavelength of blue light is 450 nm. The above settings of relationships among various wavebands can facilitate the fabrication of the wavelength selective transflective element.

For example, the image light of the first waveband group and the image light of the second waveband group may include image light with multiple wavebands, for example, at least including the light with the above-mentioned three wavebands of RGB to form color image light which may form a color image. For example, the image light with the first waveband group and the image light of the second waveband group may include image light with waveband of a single color, for example, the image light includes the light of one of the three wavebands of RGB. For another example, in the case where the wavelength of the image light with the first waveband group is different from the wavelength of the image light with the second waveband group, the image light includes the light of the waveband of any color within the visible range so as to form monochromatic image light, which can form a monochromatic image through a process similar to the above implementation.

For example, a reflectivity of the wavelength selective transflective element to the image light emitted from the third display area 130 may be 70%, 80%, 90%, 95% or other suitable values, and a transmissivity of the wavelength selective transflective element to the image light emitted from the first display area 110 may be 70%, 80%, 90%, 95% or other suitable values. Therefore, the utilization rate of the image light can be improved, so that the light energy loss of the image light emitted from the first display area and the third display area can be minimized.

For example, the first image source 11 and the third image source 13 are image sources that can emit mixed light including the three light of RGB, such as a light emitting diode (LED) display or a liquid crystal display (LCD). For example, the type of the second image source in the previous embodiment may be as same as that of the first image source 11 and the third image source 13.

For example, the transflective element may be a polarization-wavelength selective transflective element, for example, the image light emitted from the first display area 110 and the image light emitted from the second display area 120 may be in the same or substantially the same waveband but have different polarization states, and the transflective element is configured to reflect a first image light and transmit a second image light.

For example, the term "waveband" in this embodiment has the same or similar characteristics as the above-mentioned embodiment, which will not be repeated here. For example, the polarization direction of the first polarization state is perpendicular to the polarization direction of the second polarization state. For example, one of the first polarization state and the second polarization state includes the polarization state of S, and the other of the first polarization state and the second polarization state includes the polarization state of P. The embodiments of the present disclosure are not limited to this case. For example, in the case where the first polarization state and the second polarization state have polarization directions perpendicular to each other, they may not be the polarization state of S or not be the polarization state of S. For example, the first polarization state and the second polarization state may be two kinds of linear polarization states with polarization directions perpendicular to each other, or two kinds of circular polarization states with polarization directions orthogonal to each other, or two kinds of elliptical polarization states with polarization directions orthogonal to each other.

For example, the first image light includes RGB light in the polarization state of S, and the second image light includes RGB light in the polarization state of P. For another example, the first image light includes RGB light in the polarization state of P, and the second image light includes RGB light in the polarization state of S.

For example, the transflective element 8 has a higher reflectivity to one of the first image light and the second image light than that to the other one. Alternatively, the transflective element 8 has a higher transmissivity to one of the first image light and the second image light than that to the other one. For example, the transflective element 8 has a higher reflectivity to the second image light than that to the first image light. For example, the transflective element 8 has a higher transmissivity to the first image light than that to the second image light.

For example, the transflective element 8 has a higher reflectivity to one of the first image light and the second image light than that to the other one, and has a lower transmissivity to one of the first image light and the second image light than that to the other one. For example, the reflectivity of the transflective element 8 to the second image light is higher than that to the first image light, and the transmissivity of the transflective element 8 to the second image light is lower than that to the first image light.

For example, the reflectivity of the transflective element 8 in the form of the polarization-wavelength selective transflective element to the image light emitted from the second display area 120 may be 70%, 80%, 90%, 95% or other suitable values, and the transmissivity of the transflective element 8 to the image light emitted from the first display area 110 may be 70%, 80%, 90%, 95% or other suitable values. Therefore, the utilization rate of the image light by the transflective element 8 can be improved, so that the light energy loss of the image light emitted from the first display area and the second display area can be reduced as much as possible.

For example, the wavelength selective transflective element and/or polarization-wavelength selective transflective element as described above may include a selective transflective film formed by stacking inorganic oxide films or polymer films. The transflective film is formed by stacking at least two types of films with different refractive indices. The "different refractive indices" here refers to that the refractive indices of these films are different in at least one of three directions namely X direction, Y direction and Z direction. For example, by pre-selecting required films with different refractive indices and stacking the films in a pre-set order, a transflective film with selective reflection and selective transmission characteristics can be formed, and the ransflective film can selectively reflect light with one characteristic and transmit light with another characteristic. For example, for a film made of inorganic oxide material, a composition of the film is selected from one or more selected from a group consisting of tantalum pentoxide, titanium dioxide, magnesium oxide, zinc oxide, zirconium oxide, silicon dioxide, magnesium fluoride, silicon nitride, silicon oxynitride and aluminum fluoride. For example, for a film made of organic polymer material, it includes at least two types of thermoplastic organic polymer films. For example, these two types of thermoplastic polymer films are alternately arranged to form an optical film, and these two types of thermoplastic polymer films have different refractive indices. For example, the above-mentioned organic polymer materials have molecules in a chained structure, and the molecules will be aligned in a certain direction after being performed a stretching process, which leads to different refractive indices in different directions. As a result, the required film can be formed through a specific stretching process. For example, the thermoplastic polymer as mentioned above may be one or more selected from a group consisting of polyethylene terephthalate (PET) and its derivatives with different polymerization degrees, polyethylene naphthalate (PEN) and its derivatives with different polymerization degrees, polybutylene terephthalate (PBT) and its derivatives with different polymerization degrees, etc.

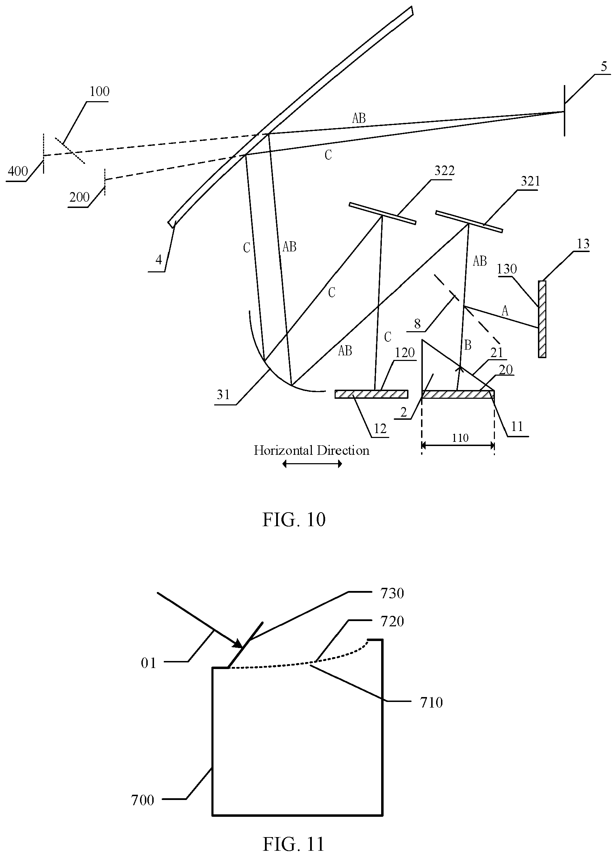

FIG. 10 is a schematic diagram of another display device provided by at least one embodiment of the present disclosure. The embodiment shown in FIG. 10 has the following differences from the embodiment shown in FIG. 9. The display device shown in FIG. 10 includes the first image source 11, the third image source 13 and the transflective element 8 shown in FIG. 9, as well as the second image source 12 shown in FIG. 7. The display device shown in FIG. 10 is equivalent to a combination of the technical solution of forming a third virtual image 300 by using image light emitted from the second image source 12 as shown in FIG. 7, the technical solution of forming a first virtual image 100 by using image light emitted from the first image source 11 as shown in FIG. 10, and the technical solution of forming a fourth virtual image 400 by using image light emitted from the third image source 13.

For example, in FIG. 10, a distance from the display surface of the first display area 110 to the first reflection element 31, a distance from the display surface of the second display area 120 to the first reflection element 31 and a distance from the display surface of the third display area 130 to the first reflection element 31 are different from each other. Thus it can be considered that a propagation distance of image light emitted from the display surface of the first display area 110 during the process of being propagated from the display surface of the first display area 110 to the first reflection element 31, a propagation distance of image light emitted from the display surface of the second display area 120 during the process of being propagated from the display surface of the second display area 120 to the first reflection element 31, and a propagation distance of image light emitted from the display surface of the third display area 130 during the process of being propagated from the display surface of the third display area 130 to the first reflection element 31 are different from each other. Therefore, images can be formed at different distances from the observation area 5. In this case, optical distances of image light emitted from the first display area 110, the second display area 120 and the third display area 130 and respectively propagated to the first reflection element 31 are different from each other. In at least one embodiment of the present disclosure, by adjusting a distance between each of the second reflection element 321 and the transflective element 8 and each of the first display area 110 and the first reflection element 31, a distance between the third reflection element 322 and each of the second display area 120 and the first reflection element 31, and a distance between the second reflection element 321 and each of the third display area 130 and the first reflection element 31, it can be realized that the distances from the display surfaces of the three display areas to the first reflection element 31 are different from each other, and that the optical distances of the image light emitted from the three display areas and respectively propagated to the first reflection element 31 are different from each other.

For the technical solution of forming a third virtual image 300 by using the image light emitted from the second image source 12 as shown in FIG. 10, and the technical solution of forming a first virtual image 100 by using the image light emitted from the first image source 11 as shown in FIG. 10, and the technical solution of forming a fourth virtual image 400 by using the image light emitted from the third image source 13, reference can be made to the previous description without repeating here.

For example, in at least one embodiment of the present disclosure, "matched and fused with" and "image(s) blended with real scene(s)" and the like may refer to that, a displayed content corresponding to information in a displayed image (for example, an image formed by the display device or a head-up display including a display device, such as a virtual image formed by reflection) observed by the user in the observation area (for example, an eyebox area) is correspondingly displayed at a preset position in a real scene presented by the windshield. For example, in the case where the displayed image includes an image of a bank, when the user watches the outside through the windshield, the image of the bank will be correspondingly displayed at a position of the bank in the real scene. For example, the display device and/or the head-up display can display in a matched and fused manner based on at least one of augmented reality (AR) and mixed reality (MR) technologies. For example, when the transportation equipment is in a driving state, an image image that matches and fuses a displayed content corresponding to navigation map information, navigation prompt information or planned route information with a real scene is projected onto the eyebox area at the driver's position to achieve a better display effect, which is help for improving the safety and driving experience of the user when driving the transportation equipment.

At least one embodiment of the present disclosure further provides a head-up display. FIG. 11 is a schematic diagram of a head-up display provided by at least one embodiment of the present disclosure. As shown in FIG. 11, the head-up display includes a reflection imaging component 4 and any display device provided by at least one embodiment of the present disclosure, and FIG. 11 illustrates the case where the display device shown in FIG. 2A is included, by way of example. The reflection imaging component 4 is configured to reflect the image light, which is reflected to the reflection imaging component 4 from the first reflection element 31, to the observation area 5, and is configured to transmit ambient light. The user located in the observation area 5 can watch the first virtual image 100 formed by the reflection imaging component 4 which reflects the image light emitted from the display device, and the environmental scene located at a side of the reflection imaging component 4 away from the observation area 5. According to the head-up display provided by at least one embodiment of the present disclosure, the oblique image presented to the user (such as a driver or a passenger) possesses an oblique degree which is uniform and consistent, so as to prevent from any excessive bending part in the oblique image as presented, and to avoid the problems that the information cannot be clearly displayed due to the bending and distortion of the image and that the user's perception is affected correspondingly. For example, when the oblique image is an image of a road sign on the ground surface, it can be more closely attached with the ground surface and better blended with real objects of the outside, thus improving the user's experience of the display device.

For example, in the head-up display provided by some other embodiments, in the case where the head-up display includes a display device adopting a multi-layer display solution, the user located in the observation area 5 can watch a plurality of virtual images formed by the reflection imaging component 4 utilizing the image light emitted from the display device.

For example, image light emitted by an elliptical display device is incident on the reflection imaging component 4, and light reflected by the reflection imaging component 4 is incident to the user, for example, to the observation area 5 where the driver's eyes are located, so that the user can observe a virtual image formed outside the reflection imaging component, for example, without affecting the user's observation of the external environment.

For example, the observation area 5 may be an eyebox area, which refers to a planar area where the user's eyes are located and the image displayed by the head-up display can be seen. For example, the user's eyes deviate from the center of the eyebox area by a certain distance, for example, shifting upwards, downwards, leftwards or rightwards with respect to the center of the eyebox area by a certain distance, the user can still see the image displayed by the head-up display as long as the user's eyes are still in the eyebox area.

For example, the reflection imaging component 4 may be a windshield window or an imaging window of a motor vehicle. For example, the windshield is a glass windshield and the imaging window is a transparent imaging plate. For example, the windshield is used to transmit and reflect the image light emitted by the windshield head-up display (Windshield-HUD, W-HUD), and the imaging window is used to transmit and reflect the image light emitted by the combiner head-up display (Combiner-HUD, C-HUD).

For example, as shown in FIG. 11, the head-up display further includes an encapsulation housing 700 with an opening 710; the image source 100 and the first reflection element 3100 and a first reflection element 31 may all be located inside the encapsulation housing 700, and the reflection imaging component 4 is located outside the encapsulation housing 700. The first reflection element 31 reflects image light emitted by the image source 100 to a position where the opening 710 of the encapsulation housing 700 is located, so that the image light exits the encapsulation housing 700 through the opening 710; and the image light that exits the opening 710 of the encapsulation housing 700 is reflected to the observation area 5 by the reflection imaging component 4.

For example, as shown in FIG. 11, the virtual image formed by image light emitted from the first display area 110 and reflected by the reflection imaging component 4 is the first virtual image 100, which is oblique with respect to the horizontal direction, for example, having an included angle with respect to the horizontal direction. The horizontal direction may refer to a direction perpendicular to the plane where the observation area 5 is located, or a direction parallel to the ground surface along which the transportation equipment adopting the head-up display travels.

For example, the image source in at least one embodiment of the present disclosure may include a light source, a backlight assembly, and an image generator.

For example, the light source may include at least one electroluminescent device that generates light by the excitation of an electric field, such as light emitting diode (LED), organic light-emitting diode (OLED), Mini LED, Micro LED, cold cathode fluorescent lamp (CCFL), cold LED light (CLL), electro luminescent (EL) technology, field emission display (FED) technology or quantum dot light source (QD).

For example, the image generator may include a liquid crystal display panel. For example, the liquid crystal display panel may include an array substrate, an opposite substrate, a liquid crystal layer located between the array substrate and the opposite substrate, and a sealant which encapsulates the liquid crystal layer. For example, the liquid crystal display panel further includes a first polarizing layer arranged at a side of the array substrate away from the opposite substrate, and a second polarizing layer arranged at a side of the opposite substrate away from the array substrate. For example, the light source is configured to provide backlight for the liquid crystal display panel, and the backlight is converted into image light after passing through the liquid crystal display panel.

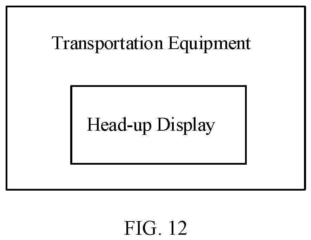

For example, at least one embodiment of the present disclosure further provides a transportation equipment. FIG. 12 is a schematic diagram of a transportation equipment provided by at least one embodiment of the present disclosure. As shown in FIG. 12, the transportation equipment includes any one of the head-up displays provided by the embodiments of the present disclosure. Alternatively, in at least one embodiment, the transportation equipment includes any one of the display devices provided by the embodiments of the present disclosure.

For example, in the case where the transportation equipment includes the head-up display, the reflection imaging component is the windshield window or the imaging window of the transportation equipment, for example, the front window (e.g., the front windshield) of the transportation equipment serves as the reflection imaging component 4 of the head-up display. The transportation equipment provided by at least one embodiment of the present disclosure adopts the head-up display described above, so that the oblique image such as the first virtual image 100 presented to the user (such as a driver or a passenger) possesses a uniform and consistent oblique degree, so as to prevent the oblique image as presented from any excessive bending part, and avoid the problems that information cannot be clearly displayed due to the bending or distortion of the virtual image and that the user's perception is affected correspondingly. For example, when the oblique image is an image of a road sign on the ground surface, it can be more closely attached with the ground surface and better blended with real objects of the outside, thus improving the user's experience of the display device.

For example, in the case that the head-up display described above is applied to a transportation equipment, the third virtual image 300, the fourth virtual image 400 and the fifth virtual image 500 are vertical with respect to the ground surface, and the end of the first virtual image 100 away from the ground surface is farther from the observation area 5 than the end of the first virtual image 100 close to the ground surface, so that each of the virtual images can be matched and fused with the corresponding real scene, and that the driver can watch the image at different distances. This is conductive to matching and fusing images at different distances with real scenes at different distances, so that the driver has no need of switching back and forth between images with fixed distances and real scenes with different distances, thus avoiding the conflict of visual convergence adjustment and improving the use experience of the transportation equipment.

For example, the plurality of virtual images generated by the display device and the head-up display are not limited to the first virtual image 100, the third virtual image 300, the fourth virtual image 400 and the fifth virtual image 500. These virtual images are only used as examples to explain the technical solution of the present disclosure, and other oblique virtual images or vertical virtual images can also be included.

For example, the transportation equipment may be various appropriate means of transportation. For example, in the case where a front window is arranged at a driving position of the transportation equipment and an image is projected on the front window through a vehicle-mounted display system, the transportation equipment can include various types of land transportation facilities such as cars, or water transportation facilities such as boats.

It should be noted that, for the sake of clarity, in the drawings used to describe the embodiments of the present disclosure, the thickness of layers or areas is enlarged or reduced, that is, these drawings are not drawn to actual scales.

Although the present disclosure has been described in detail with general descriptions and specific embodiments, it is obvious to those skilled in the art that some modifications or improvements can be made on the basis of the embodiments of the present disclosure. Therefore, these modifications or improvements made on the basis of not deviating from the spirit of the present disclosure belong to the scope of the present disclosure.

For the present disclosure, the following statements should be noted:
(1) The accompanying drawings involve only the structure(s) in connection with the embodiment(s) of the present disclosure, and other structure(s) can be referred to common design(s).
(2) In case of no conflict, the embodiments of the present disclosure and the features in the embodiments can be combined with each other to obtain new embodiments.

What have been described above are only specific implementations of the present disclosure, the protection scope of the present disclosure is not limited thereto, and the protection scope of the present disclosure should be based on the protection scope of the claims.

## Claims

1. A display device, comprising:
a first image source, comprising a first display area;
a refraction element, configured to refract image light emitted from at least partial region of the first display area; and
a first reflection element, wherein the image light refracted by the refraction element is then reflected by the first reflection element and propagated to an observation area to form a first virtual image, wherein
along a direction from a first end of the at least partial region to a second end of the at least partial region, an optical distance of at least part of the image light emitted from the at least partial region, between a light incident surface of the refraction element and a light exiting surface of the refraction element, gradually decreases.

2. The display device according to claim 1, wherein the first virtual image corresponding to the image light emitted from the at least partial region has a proximal end close to the observation area and a distal end away from the observation area, the image light corresponding to the first end corresponds to the proximal end, and the image light corresponding to the second end corresponds to the distal end, and a height of the distal end of the first virtual image is higher than a height of the proximal end of the first virtual image.

3. The display device according to claim 1 or 2, wherein
along the direction from the first end of the at least partial region to the second end of the at least partial region, a thickness of the refraction element in a direction of chief light of the image light emitted from the at least partial region gradually decreases; and/or,
along the direction from the first end of the at least partial region to the second end of the at least partial region, a refraction index of the refraction element in the direction of the chief light of the image light emitted from the at least partial region gradually decreases.

4. The display device according to claim 3, wherein along the direction from the first end of the at least partial region to the second end of the at least partial region, the refraction index of the refraction element remains unchanged in a case that the thickness of the refraction element in the direction of chief light of the image light emitted from the at least partial region gradually decreases;
along the direction from the first end of the at least partial region to the second end of the at least partial region, the thickness of the refraction element in the direction of chief light of the image light emitted from the at least partial region remains unchanged in a case that the refraction index gradually decreases.

5. The display device according to claim 3 or 4, wherein a surface of the refraction element away from the first image source comprises a planar surface and/or a curved surface.

6. The display device according to claim 5, wherein in a case that the surface of the refraction element away from the first image source is a planar surface, the surface of the refraction element away from the first image source has a first included angle with respect to a display surface of the first display area, and the first included angle is in a range of 1° to 60 °.

7. The display device according to any one of claims 1-6, wherein the refraction element is attached onto the at least partial region; or,
the refraction element is spaced apart from the at least partial region in a direction perpendicular to a display surface of the first display area; or,
the refraction element comprises a portion that is attached onto the at least partial region and a portion that is spaced apart from the at least partial region.

8. The display device according to any one of claims 1-7, wherein the refraction element is configured to refract image light emitted from an entirety of the first display area.

9. The display device according to any one of claims 1-7, wherein the first display area comprises a first display sub-area and a second display sub-area, and the at least partial region is the first display sub-area;
image light emitted from the second display sub-area is incident on the first reflection element without being refracted by the refraction element, and the first reflection element is further configured to reflect the image light emitted from the second display sub-area and then incident on the first reflection element to the observation area to form a second virtual image,
an included angle between the second virtual image and a ground surface is greater than an included angle between the first virtual image and the ground surface, and a second included angle between the second virtual image and the first virtual image is not zero.

10. The display device according to claim 9, wherein a displayed content of the second virtual image and a displayed content of the first virtual image are independent of each other or related to each other.

11. The display device according to any one of claims 1-10, wherein the refraction element is an integral structure, or comprises a plurality of refraction sub-elements stacked in a direction perpendicular to a display surface of the first display area.

12. The display device according to any one of claims 1-11, further comprising:
a second reflection element, configured to reflect image light emitted from the first display area and refracted by the refraction element to the first reflection element.

13. The display device according to any one of claims 1-12, further comprising:
a second image source, comprising a second display area, wherein image light emitted from the second display area is propagated to the first reflection element, and the image light emitted from the second display area and then propagated to the first reflection element forms a third virtual image different from the first virtual image; and
an included angle between the third virtual image and a ground surface is greater than an included angle between the first virtual image and the ground surface, and a display surface of the first display area is parallel to a display surface of the second display area.

14. The display device according to claim 13, further comprising:
a third reflection element, wherein the image light emitted from the second display area is propagated to the first reflection element after being reflected by the third reflection element.

15. The display device according to any one of claims 1-14, further comprising:
a third image source, comprising a third display area, wherein a third included angle between a display surface of the third display area and a display surface of the first display area is not zero; and
a transflective element, located at a side of the refraction element away from the first image source, configured to transmit image light emitted from the first display area to the first reflection element, and configured to reflect image light emitted from the third display area, wherein the image light emitted from the third display area is propagated to the first reflection element after being reflected by the transflective element, wherein
the image light emitted from the third display area and propagated to the first reflection element forms a fourth virtual image different from the first virtual image, and the first virtual image and the fourth virtual image are at least partly overlapped.

16. The display device according to claim 15, wherein an orthographic projection of the first virtual image on a plane where the fourth virtual image is located is within a range of the fourth virtual image, or, an orthographic projection of the fourth virtual image on a plane where the first virtual image is located is within a range of the first virtual image.

17. The display device according to claim 15 or 16, wherein a center of the first virtual image, a center of the fourth virtual image and a center of an eyebox area are located on a same straight line.

18. A head-up display, comprising a reflection imaging component and the display device according to any one of claims 1-17,
wherein the reflection imaging component is configured to reflect image light that is reflected by the first reflection element and then propagated to the reflection imaging component to the observation area, and to transmit ambient light.

19. A transportation equipment, comprising the display device according to any one of claims 1-17, or the head-up display according to claim 18.

20. The transportation equipment according to claim 19, wherein in a case that the transportation equipment comprises the head-up display, the reflection imaging component is a windshield window or an imaging window of the transportation equipment.
